# EUROPÄISCHE PATENTSCHRIFT

(11) **EP 1 474 480 B1**
(45) Veröffentlichungstag und Bekanntmachung des Hinweises auf die Patenterteilung: **05.01.2011**
(21) Anmeldenummer: 03709698.9
(22) Anmeldetag: 03.02.2003
(51) Int. Cl.: C08L 83/07, C09D 183/07, C08L 83/04, C09D 183/04

(54) **SELBSTHAFTENDE ADDITIONSVERNETZENDE SILICONKAUTSCHUKMISCHUNGEN, EIN VERFAHREN ZU DEREN HERSTELLUNG, VERFAHREN ZUR HERSTELLUNG VON VERBUND-FORMTEILEN UND DEREN VERWENDUNG**
SELF-ADHESIVE, ADDITION CROSS-LINKING SILICONE-RUBBER BLENDS, METHOD FOR THEIR PRODUCTION, METHOD FOR PRODUCING COMPOSITE MOULDED PARTS AND USE OF THE LATTER
MELANGES DE CAOUTCHOUC SILICONE AUTO-ADHESIFS ET A RETICULATION PAR ADDITION, LEUR PROCEDE DE PRODUCTION, PROCEDE POUR LA PRODUCTION DE PIECES MOULEES COMPOSITES ET LEUR UTILISATION

(30) Priorität: 06.02.2002 DE 10204893
(43) Veröffentlichungstag der Anmeldung: 10.11.2004
(73) Patentinhaber: Momentive Performance Materials GmbH, 51368 Leverkusen (DE)
(72) Erfinder: BOSSHAMMER, Stephan, 50679 Koeln (DE)
(74) Vertreter: Prop, Gerrit
(86) Internationale Anmeldenummer: PCT/EP2003/001030
(87) Internationale Veröffentlichungsnummer: WO 2003/066736

(56) Entgegenhaltungen:
- EP-A- 1 085 053
- EP-A- 1 106 662

## Beschreibung

Die vorliegende Erfindung betrifft additionsvernetzende Siliconkautschukmischungen, ein Verfahren zu deren Herstellung, Verfahren zur Herstellung von Verbundformteilen und deren Verwendung.

Die erfindungsgemäßen selbsthaftenden additionsvernetzenden Siliconkautschukmischungen zeichnen sich durch eine gute Haftung auf Substraten aus, ohne dass gleichzeitig die zur Herstellung der Formteile verwendeten Formen einer speziellen Behandlung bedürfen, die ein Ablösen der additionsvernetzten Siliconkautschukmischungen aus der Form ermöglicht. Weiterhin ist in der Regel keine Nachtemperung der Verbundformteile erforderlich.

Es wurden eine Reihe von Methoden vorgeschlagen, einen Haftverbund zwischen additionsvernetzenden Siliconelastomeren und verschiedenen Substraten zu erreichen. Eine Möglichkeit ist die Verwendung eines sogenannten Primers, der zur Vorbehandlung der Substratoberfläche eingesetzt wird. Dies erfordert bei der Verarbeitung einen zusätzlichen Arbeitsschritt sowie den Umgang mit Lösungsmitteln. Beides ist nachteilig. Eine weitere Möglichkeit besteht darin, durch Zusatz eines oder mehrerer Additive zur unvernetzten Siliconkautschukmischung Haftung von additionsvernetzenden Siliconelastomeren auf Substraten zu erreichen.

Eine andere Variante stellt die Herstellung eines Thermoplast-Siloxanblends dar, bei dem unterschiedliche Siloxane in die Thermoplastmatrix vor der Formgebung eingemischt wurden und die Oberfläche von Formteilen aus diesem Thermoplastblend mit einem additionsvernetzenden Siliconkautschuk zur Haftung gebracht werden. US 5 366 806 beansprucht hierbei Hydrogensiloxane mit zusätzlichen Alkenylgruppe in der Thermoplastmatrix, die mit additionsvernetzenden Polyorganosiloxankautschuken, die vorzugsweise weitere organofunktionelle SiH-Haftvermittler enthalten können haftend verbunden werden.

Die US 5 366 805 offenbart ein Polycarbonat, welches hydrogensiloxanhaltige Siloxan-Co- oder Terpolymere mit Epoxy- oder Arylgruppen enthält. Die US 5 418 065 schlägt statt eines siloxanhaltigen Thermoplasten ein Polypropylenterpolymer vor, das additionsvernetzenden Polyorganosiloxankautschuk und epoxyhaltige SiH-Siloxanen enthält, der bei der Vernetzung zur Haftung gebracht wird. Die Haftung erfolgt beispielhaft bei 8 min 120 °C. Dabei wird das Thermoplastteil unmittelbar vor dem Auftragen des Siliconkautschukes gespritzt. Das System erlaubt die Entformung des Verbundteiles aus einer Metallform.

Ein anderer Lösungsweg ist die Bereitstellung von additionsvernetzenden Polyorganosiloxankautschuken, die je nach Art des Thermoplastsubstrates ein oder mehrere Additive enthalten, und bei unterschiedlichen Bedingungen auf diesem Thermoplast während der Vernetzung zur Haftung gebracht werden können. Dabei ist es wünschenswert insbesondere Thermoplasten mit hoher Erweichungstemperaturen zur Haftung mit Siliconkautschuk zu bringen und umgekehrt die Haftung zum metallischen Formenmaterial, d.h. in der Regel Stahl, möglichst klein zu halten.

Nach US 4.087.585 wird z.B. durch den Zusatz von zwei Additiven, einem kurzkettigen Polysiloxan mit mindestens einer SiOH-Gruppe und einem Silan mit mindestens einer Epoxygruppe und einer Si-gebundenen Alkoxygruppe, eine gute Haftung auf Aluminium erreicht. Gemäss J. Adhesion Sci. Technol. Vol. 3, No. 6 pp 463-473 (1989) wird durch Zusatz eines Epoxysilans in Kombination mit einem homopolymeren Vernetzer eine gute Haftung zu verschiedenen Metallen und Kunststoffen erreicht. In EP-A 875 536 wird eine verbesserte Haftung auf verschiedenen Kunststoffen mittels Verwendung eines Alkoxysilans mit einer Epoxygruppe sowie eines Hydrogensilans mit mindestens 20 SiH-Funktionen pro Molekül erreicht, wobei sich diese Mischungen auch durch eine verbesserte Reaktivität auszeichnen.

Die EP 350 951 beschreibt die Verwendung einer Kombination von Acryl- oder Methacrylalkoxysilan mit einem epoxyfunktionellen Silan und einem partiellen Allylether eines mehrwertigen Alkohols als Additive zur Erzielung einer dauerhaften Haftung additionsvernetzender Siliconelastomere auf Glas und Metall.

Diese Mischungen haben den Nachteil, dass sie auch eine gute Haftung zu Metallen aufweisen und somit problematisch bei der Verarbeitung mit unbeschichteten metallischen Formen sind.

In der DE 199 43 666.5 wird offenbart, dass durch Zugabe einer Kombination von Glycidoxypropyltrimethoxysilan und Methacryloxypropyltrimethoxysilan eine gute Haftung zu Polyamid und Polybutylenterephthalat durch Nachtemperung der Verbundteile bei leichter Entformbarkeit aus unbeschichteten Stahlformen erreicht wird. Jedoch wird eine relativ hohe Menge der Silane verwendet und zur Erreichung einer guten Endhaftung in der Regel eine Nachtemperung der Verbundformteile empfohlen, was einen zusätzlichen Arbeitsschritt bedeutet.

US 4 082 726 offenbart die Verwendung eines Terpolymeren d.h. eines Siloxanes, das aus mindestens 3 unterschiedlichen Siloxygrupppen besteht. Dieses kann neben Si-Epoxygruppen u.a. Si-Phenyl-, SiH- sowie andere Siloxyeinheiten enthalten. Dieses Epoxysiloxan wird neben nahezu beliebigen Alkenylsiloxanen A) sowie einem Hydrogensiloxan B) verwendet, um Haftung zwischen einem Thermoplastsubstrat und einem additionsvernetzenden Polyorganosiloxankautschuk herzustellen. Es wurden keine bevorzugten Konzentrationen für die organofunktionellen Einheiten am Silicium offenbart. Die Gegenwart des epoxyhaltigen Terpolymers bewirkt sowohl eine Thermoplast- als auch eine Metallhaftung.

US 5 405 896 offenbart statt des epoxyhaltigen Siloxanterpolymeren ein Co- bzw. Terpolymer mit mindestens einer sauerstoffhaltigen Phenylen-Gruppe sowie mindestens einer SiH-Gruppe . Die Siliconkautschuke werden beispielhaft während 8 min bei 120°C auf der Thermoplastoberfläche haftend gehärtet. Die Entformung gelingt in einer nicht beschichteten Metallform.

Die US 6 127 503 schlägt statt des sauerstoffhaltigen Siloxan- Co- bzw.Terpolymeren ein Terpolymer mit mindestens einer Phenyl bzw. Phenylen-Einheit, einer stickstoffhaltigen Einheit sowie einer SiH-Gruppe vor. Die Siliconkautschuke werden beispielhaft während 10 min bei 120°C auf der Thermoplastoberfläche haftend gehärtet.

In der EP 686 671 (US 5 536 803) wird die Verwendung eines Organohydrogenpolysiloxans als Additiv beschrieben, wobei mindestens 12-Mol-% der monovalenten Si-gebundenen organischen Radikale aromatische Gruppen sind. Hierbei wurde zwar Haftung zu ABS, die nicht quantifiziert wurde, und eine leichte Entformbarkeit gegenüber metallischen Oberflächen festgestellt, eine Bewertung der typischen technischen Thermoplasten wie z.B. Polyamid, Polybutylenterephthalat oder Polyphenylensulfid wurde nicht vorgenommen. Eine spezifische Aufgabenstellung für diese Thermoplasten wurde nicht gesehen. Ebenso wurde kein bevorzugter Bereich für den SiH-Gehalt der entsprechenden Siloxan-Komponenten offenbart. Die Siliconkautschuke brachte man beispielhaft während 100 sec bis 8 min bei 60-100°C auf der Thermoplastoberfläche während der Vernetzung zur Haftung.

Aufgabe der vorliegenden Erfindung ist die Bereitstellung von additionsvernetzenden Siliconkautschukmischungen mit einer guten Haftung auf verschiedenen Substraten, insbesondere technischen Thermoplasten mit hoher Erweichungstemperatur wie Polyamid, Polybutylenterephthalat oder Polyphenylensulfid, ohne dass für die Verarbeitung auf einem Spritzgussautomaten die Werkzeuge zur Verhinderung einer Werkzeughaftung beschichtet oder mit Formtrennmitteln behandelt werden müssen und ohne dass die Verbundteile in der Regel nachgetempert werden müssen. Dazu wird nach einfach und preiswert herstellbaren Zusatzkomponenten für Siliconkautschuke gesucht, die auch als getrennte Komponente in kommerziell bekannte bevorzugt 2 Komponenten Kautschuke getrennt zugegeben werden können.

Es wurde nun gefunden, dass additionsvernetzende Mischungen, die neben den üblichen Bestandteilen ein SiH-reiches Organohydrogenpolysiloxan als Vernetzer, ein phenylgruppenhaltiges Organohydrogenpolysiloxan und mindestens ein Alkoxysilan oder Alkoxysiloxan mit mindestens einer Epoxygruppe diese Aufgabe lösen und bei dieser Kombination der Phenylgehalt minimiert werden kann.

Gegenstand der Erfindung sind daher additionsvernetzende Siliconkautschukmischungen, enthaltend:
a) mindestens ein lineares oder verzweigtes Organopolysiloxan mit mindestens zwei Alkenylgruppen mit einer Viskosität von 0,01 bis 30.000 Pa·s,
b) mindestens ein Organohydrogensiloxan mit jeweils mindestens 2 SiH-Einheiten pro Molekül, mit der Maßgabe, dass
   i) mindestens eines der genannten Organohydrogensiloxane einen Gehalt von mehr als 7 mmol SiH/ g aufweist,
   ii) mindestens eines der genannten Organohydrogensiloxane mindestens eine aromatische Gruppe im Molekül aufweist, und
   iii) die Merkmale i) und ii) im selben Organohydrogensiloxan oder in verschiedenen Organohydrogensiloxanen verwirklicht sein können,
   worin die Komponente b) die Komponenten b1), b2) und gegebenenfalls die Komponente b3) umfaßt, wobei
   b1) mindestens ein Organohydrogensiloxan mit mindestens zwei SiH-Einheiten pro Molekül und einem Gehalt von mehr als 7 mmol SiH/ g ist, das keine aromatischen Gruppen enthält,
   b2) mindestens ein Organohydrogensiloxan mit mindestens zwei SiH-Einheiten pro Molekül und mindestens einer im Molekül enthaltenen aromatischen Gruppe ist,
      und die gegebenenfalls vorliegende Komponente
   b3) mindestens ein Organohydrogensiloxan mit mindestens zwei SiH-Einheiten pro Molekül und einem Gehalt von weniger als 7 mmol SiH/ g ist, das keine aromatischen Gruppen enthält.
c) mindestens einen Pt-, Ru- und/oder Rh-Katalysator,
d) mindestens ein Alkoxysilan und/oder Alkoxysiloxan, die jeweils mindestens eine Epoxygruppe aufweisen,
e) gegebenenfalls mindestens einen Inhibitor,
f) gegebenenfalls mindestens einen, gegebenenfalls oberflächlich modifizierten Füllstoff, und
g) gegebenenfalls mindestens einen Hilfsstoff,
wobei das molare Verhältnis der Gesamtmenge der SiH-Gruppen zu der Gesamtmenge an Si-gebundenen Alkenylgruppen mindestens 0,7, bevorzugt mehr als 1 und nicht mehr als 7 beträgt. D.h. die Mengen der Komponente b) wird in der Weise auf den Alkenyl-(bevorzugt Vinyl)gehalt von a) abgestimmt, dass diese Bedingung erfüllt wird.

Das Mengenverhältnis von a) zur Komponente b) kann trotz des so begrenzten SiH zu Si-Alkenyl - Verhältnisses prinzipiell in weiten Grenzen variiert werden.

Bevorzugt weisen die erfindungsgemäßen, additionsvernetzenden Siliconkautschukmischungen die folgende Zusammensetzung auf (Teile sind Gewichtsteile):

| | |
|---|---|
| 100 Teile | Polyorganosiloxan(e) a) |
| 0,2 - 60 Teile | Organohydrogensiloxan(e) b) |
| 1 - 1000 ppm, | bezogen auf den Metallgehalt des Katalysators c) und Gesamtmenge der Siliconkautschukmischung |
| 0,01 - 10 Teile | des Epoxyalkoxysilanes bzw. Epoxyalkoxysiloxanes d) |
| 0 - 2 Teile | des Inhibitors e) |
| 0 - 300 | Teile des gegebenenfalls oberflächlich modifizierten Füllstoffs f) |
| 0 - 15 | Teile der Hilfsstoffe g). |

Die erfindungsgemäße, additionsvernetzende Siliconkautschukmischung enthält a) mindestens ein lineares oder verzweigtes Organopolysiloxan mit mindestens zwei Alkenylgruppen mit einer Viskosität von 0,01 bis 30.000 Pa·s.

Das Organopolysiloxan a) kann ein verzweigtes Polysiloxan sein. Der Begriff "verzweigtes Polysiloxan" schließt auch makrocyclische bzw. spirocyclische Strukturen ein, d.h dies sind unter 90°C schmelzende Feststoffe mit Schmelzviskositäten des genannten Bereiches oder Feststoffe, die in üblichen Lösungsmiteln oder Siloxanpolymeren löslich sind.

Die Komponente a) weist im wesentlichen keine Si-H-Gruppen auf.

Das Organopolysiloxan a) ist bevorzugt ein lineares oder verzweigtes Polysiloxan, das die folgenden Siloxy-Einheiten aufweisen kann: 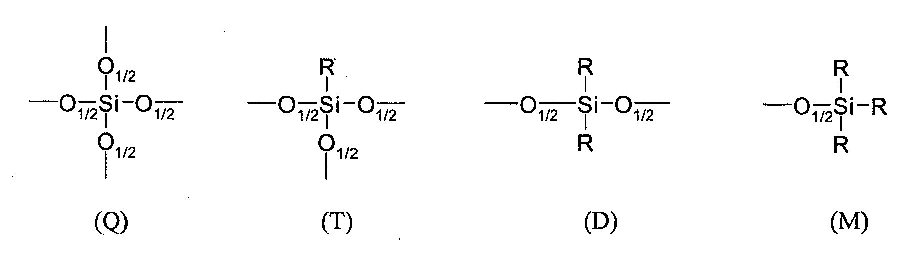 worin die Substituenten R gleich oder verschieden sein können und aus der Gruppe ausgewählt werden, die besteht aus
- einem geradkettigen, verzweigten oder cyclischen Alkylrest mit bis zu 12 Kohlenstoffatomen, der gegebenenfalls substituiert sein kann mit mindestens einem Substituenten, ausgewählt aus der Gruppe, die aus Phenyl und Halogen, insbesondere Fluor, besteht,
- einem geradkettigen, verzweigten oder cyclischen Alkenylrest mit bis zu 12 Kohlenstoffatomen,
- einem Phenylrest,
- Hydroxyl und
- einem geradkettigen, verzweigten oder cyclischen Alkoxyrest mit bis zu 6 Kohlenstoffatomen,
oder zwei Substituenten R aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen,
mit der Maßgabe, dass mindestens zwei Substituenten R je Molekül den genannten Alkenylrest darstellen, der gleich oder verschieden sein kann.

Die genannten Siloxyeinheiten können untereinander statistisch verteilt oder blockartig angeordnet vorliegen.

Ein bevorzugter geradkettiger, verzweigter oder cyclischer Alkylresten mit bis zu 12 Kohlenstoffatomen ist Methyl.

Ein bevorzugter, mit Phenyl substituierter Alkylrest schließt beispielsweise Styryl (Phenylethyl) ein.

Ein bevorzugter, mit Halogen substituierter Alkylrest schließt beispielsweise einen Fluoralkylrest mit mindestens einem Fluoratom ein, wie zum Beispiel Perfluoralkylethyl-Reste wie zum Beispiel bevorzugt 3,3,3-Trifluorpropyl oder Perfluoralklyether bzw Epoxy-perfluoralkylether.

Geradkettige oder verzweigte Alkenylreste mit 2 bis 8 Kohlenstoffatomen schließen beispielsweise ein: Vinyl, Allyl, Hexenyl, Octenyl, Vinylphenylethyl, Cyclohexenylethyl, Ethylidennorbomyl bzw. Norbornenylethyl oder Limonyl. Besonders bevorzugt ist Vinyl.

Ein bevorzugter geradkettiger, verzweigter oder cyclischer Alkoxyrest mit bis zu 6 Kohlenstoffatomen ist beispielsweise Methoxy und Ethoxy.

Bevorzugte Reste R sind somit Methyl, Phenyl, Vinyl und 3,3,3-Trifluorpropyl.

Bevorzugte Siloxy-Einheiten sind beispielsweise Alkenyleinheiten, wie Dimethylvinylsiloxy-, Methylvinylsiloxy-, Vinylsiloxy-Einheiten, Alkyleinheiten, wie Trimethylsiloxy-, Dimethylsiloxy- und Methylsiloxy-Einheiten, Phenylsiloxyeinheiten, wie Triphenylsiloxy-, Dimethylphenylsiloxy-, Diphenylsiloxy-, Phenylmethylsiloxy- und Phenylsiloxyeinheiten, phenylsubstituierte Alkylsiloxyeinheiten, wie (Methyl)(Styryl)siloxy.

Bevorzugt weist das Organopolysiloxan a) eine Anzahl der Siloxy-Einheiten von 100 bis 10000, besonders bevorzugt 300 bis 1000 auf.
Der Alkenylgehalt des Organopolysiloxans a) liegt bevorzugt im Bereich von 0,003 mmol/g bis 11,6 mmol/g.

Das Organopolysiloxan a) weist eine Viskosität von 0,001 bis 30 kPa.s, ganz besonders bevorzugt 5 bis 200 Pa.s auf. Die Viskosität wird gemäß DIN 53 019 bei 20°C bestimmt.

In einer bevorzugten Ausführungsform der Erfindung umfasst das Organopolysiloxan a) ein Gemisch verschiedener Organopolysiloxane mit unterschiedlichen Alkenyl-(bevorzugt Vinyl-)gehalten, deren Alkenyl- bzw. Vinylgehalte sich bevorzugt mindestens um den Faktor 2 unterscheiden.

Ein bevorzugtes Gemisch der Organopolysiloxane a) ist eine Mischung, die ein alkenylgruppenreiches (bevorzugt vinylgruppenreiches) Organopolysiloxan und mindestens ein, bevorzugt mindestens zwei, besonders bevorzugt zwei alkenylgruppenarmen (bevorzugt vinylgruppenarmen) Organopolysiloxanen umfasst.

Das alkenylgruppenreiche (bevorzugt vinylgruppenreiche) Organopolysiloxan weist bevorzugt einen Alkenylgruppengehalt von mehr als 0,4 mmol/g bis 11,6 mmol/g auf.

Diese Siloxanpolymere können vorzugsweise verzweigte Polysiloxane darstellen, wie zuvor definiert, d.h. unter 90°C schmelzende Feststoffe bzw. Feststoffe, die in üblichen Lösungsmiteln oder Siloxanpolymeren löslich sind.
Das alkenylgruppenarme (bevorzugt vinylgruppenarme) Organopolysiloxan weist bevorzugt einen Alkenylgruppengehalt von weniger als 0,4 mmol/g, bevorzugt 0,02 bis 0,4 mmol/g auf.
Der Alkenylgehalt wird hier über ¹H-NMR bestimmt siehe A.L. Smith (Ed.) : The Analytical Chemistry of Silicones , J.Wiley & Sons 1991 Vol. 112 S. 356 ff in Chemical Analysis ed. by J.D. Winefordner.

Vorzugsweise wird der Alkenylgruppengehalt durch Alkenyldimethylsiloxyeinheiten eingestellt. Dadurch ergibt sich neben den unterschiedlichen Alkenylgehalten eine unterschiedliche Kettenlänge und damit eine unterschiedliche Viskosität.

Durch die Verwendung der vorstehend beschriebenen Gemische mit unterschiedlichen Alkenyl- (bevorzugt Vinyl-)Gehalten ist es möglich, die mechanischen Eigenschaften, wie Dehnung und Weiterreißfestigkeit der erfindungsgemäßen vernetzten Silikonkautschuke zu optimieren.

Das Mischungsverhältnis der alkenylgruppenreichen Organopolysiloxane a) liegt bevorzugt bei 0,5 bis 30 Gew.-%, bezogen auf die Gesamtmenge der Organopolysiloxane a). Der Gesamtalkenylgehalt eines Gemisch verschiedener Organopolysiloxane mit unterschiedlichen Alkenyl-(bevorzugt Vinyl-)gehalten sollte bevorzugt weniger als 0,9 mmol/g betragen.

Die Organopolysiloxane a) können nach an sich bekannten Verfahren hergestellt werden, wie zum Beispiel mit alkalischen oder sauren Katalysatoren, wie in US 5,536,803 Spalte 4.

Die Menge der Organopolysiloxane a) kann bevorzugt zwischen etwa 20,5 und 99,8 Gew.- % bezogen auf die Gesamtmenge der Silikonkautschukmischung betragen.

Die alkenylgruppenreichen Organopolysiloxane schließen insbesondere in Lösungsmitteln lösbare Festharze oder Flüssigharze ein, die bevorzugt aus Trialkylsiloxy (M-Einheiten) und Silicateinheiten (Q-Einheiten) bestehen, und die bevorzugt Vinyldimethylsiloxyeinheiten in einer Menge enthalten, so dass ein Gehalt der Vinylgruppen von mindestens 2 mmol/g resultiert. Diese Harze können darüber hinaus noch bis maximal 10 Mol-% Alkoxy- oder OH-Gruppen an den Si-Atomen aufweisen.

Die Komponente b) der erfindungsgemäßen, additionsvernetzenden Silikonkautschukmischung stellt mindestens ein Organohydrogensiloxan mit jeweils mindestens 2 SiH-Einheiten pro Molekül dar, mit der Maßgabe, dass
i) mindestens eines der genannten Organohydrogensiloxane einen Gehalt von mehr als 7 mmol SiH/g aufweist,
ii) mindestens eines der genannten Organohydrogensiloxane mindestens eine aromatische Gruppe im Molekül aufweist, und
iii) die Merkmale i) und ii) im selben Organohydrogensiloxan oder in verschiedenen Organohydrogensiloxanen verwirklicht sein können.
worin die Komponente b) die Komponenten b1), b2) und gegebenenfalls die Komponente b3) umfaßt, wobei
b1) mindestens ein Organohydrogensiloxan mit mindestens zwei SiH-Einheiten pro Molekül und einem Gehalt von mehr als 7 mmol SiH/ g ist, das keine aromatischen Gruppen enthält,
b2) mindestens ein Organohydrogensiloxan mit mindestens zwei SiH-Einheiten pro Molekül und mindestens einer im Molekül enthaltenen aromatischen Gruppe ist,
   und die gegebenenfalls vorliegende Komponente
b3) mindestens ein Organohydrogensiloxan mit mindestens zwei SiH-Einheiten pro Molekül und einem Gehalt von weniger als 7 mmol SiH/ g ist, das keine aromatischen Gruppen enthält.

Danach ist es für die erfindungsgemäße, additionsvernetzende Silikonkautschukmischung wesentlich, dass sie mindestens ein Organohydrogensiloxan mit einem Gehalt von mehr als 7 mmol SiH/g und mindestens ein Organohydrogensiloxane mit mindestens einer aromatische Gruppe im Molekül enthält. Diese Merkmale können beispielsweise in der Weise verwirklicht sein, dass die erfindungsgemäße, additionsvernetzende Silikonkautschukmischung ein Organohydrogensiloxan mit einem Gehalt von mehr als 7 mmol SiH/g und mindestens einer aromatische Gruppe im Molekül enthält, oder es können zwei verschiedene Organohydrogensiloxane vorliegen, wovon eines einen SiH-Gehalt von mehr als 7 mmol /g und keine aromatische Gruppe im Molekül aufweist und das andere mindestens eine aromatische Gruppe im Molekül enthält, und einen beliebigen Si-H-Gehalt aufweisen kann, wobei jeweils beliebige weitere Organohydrogensiloxane neben den genannten wesentlichen Organohydrogensiloxanen vorliegen können.

Die Organohydrogensiloxane gemäß Komponente b) werden bevorzugt aus linearen, verzweigte oder cyclischen Polysiloxanen ausgewählt, die die folgenden Siloxy-Einheiten aufweisen können: 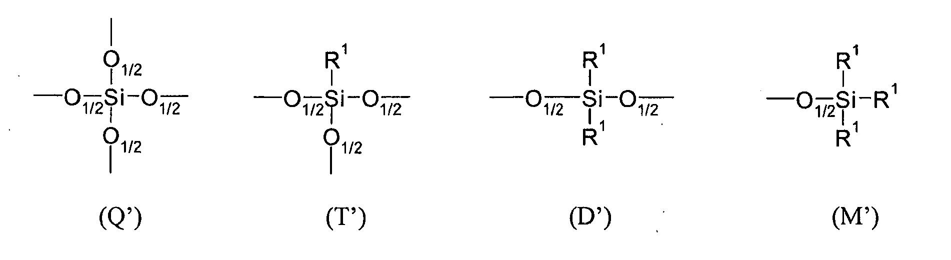 worin R¹ gleich oder verschieden sein kann und aus der Gruppe ausgewählt wird, die besteht aus
- Wasserstoff,
- einem geradkettigen, verzweigten oder cyclischen Alkylrest mit bis zu 12 Kohlenstoffatomen, der gegebenenfalls mit einer aromatischen Gruppe substituiert sein kann,
- einem geradkettigen, verzweigten oder cyclischen Alkenylrest mit bis zu 12 Kohlenstoffatomen,
- Hydroxyl,
- einer aromatischen Gruppe und
- einem geradkettigen, verzweigten oder cyclischen Alkoxyrest mit bis zu 6 Kohlenstoffatomen, oder zwei Gruppen R¹ aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen,
oder zwei Substituenten R¹ aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen.

Die Organohydrogensiloxane b) sind vorzugsweise lineare, cyclische oder verzweigte Organopolysiloxane aus mindestens einer der Einheiten Q', T', D' und M', die vorzugsweise MeHSiO- bzw. Me₂HSiO_{0,5}-Einheiten neben gebenenfalls anderen Organosiloxyeinheiten, vorzugsweise Dimethylsiloxyeinheiten, enthalten können.

Hinsichtlich des Merkmals i) ist der SiH-Gehalt dieser Organohydrogensiloxane auf > 7 mmol SiH/g begrenzt, vorzugsweise liegt er bei 10 - 16,7 mmol/g. Diese Siloxanpolymere können auch verzweigte Polysiloxane darstellen, wie zuvor definiert, d.h. unter 90°C schmelzende Feststoffe bzw. Feststoffe, die in üblichen Lösungsmiteln oder Siloxanpolymeren löslich sind,
Diese Siloxane sind vorzugsweise bei Raumtemperatur flüssig bzw. siloxanlöslich, d.h. sie weisen bevorzugt weniger als 1000 Siloxyeinheiten auf. Die Kettenlänge für Ketten dieser überwiegend aus MeHSiO-Einheiten bestehenden Siloxane liegt vorzugsweise bei 3 bis 200, besonders bevorzugt bei 15 bis 60 .
Der SiH-Gehalt wird hier über ¹H-NMR bestimmt siehe A.L. Smith (Ed.) : The Analytical Chemistry of Silicones , J.Wiley & Sons 1991 Vol. 112 S. 356 ff. in Chemical Analysis ed. by J.D. Winefordner.

Hinsichtlich des Merkmals ii) kann die aromatische Gruppe gegebenenfalls substituiert sein. Es können wahlweise ein bis drei Substituenten ausgewählt zum Beispiel aus Alkyl, Alkoxy, Alkylen, Alkylenoxy und Halogen vorliegen. Um das Merkmal ii) zu erfüllen kann die aromatische Gruppe direkt an ein Siliziumatom gebunden oder als Substituent einer Alkylgruppe, die an ein Siliziumatom gebunden ist, vorliegen. Bevorzugte aromatische Einheiten als Substituent R¹ schließen zum Beispiel ein: aromatische Einheiten, bei denen die aromatische Gruppe direkt an ein Siliziumatom gebunden ist, wie Phenyl, C₁-C₁₀-Alkylphenyl, C₂-C₁₀-Alkylenphenyl, C₁-C₁₀-Alkoxyphenyl, C₂-C₁₀-Alkylenoxyphenyl, Halogenphenyl und Naphthyl, und aromatische Einheiten, bei denen die aromatische Gruppe via eine Alkylgruppe mit dem Siliziumatom verbunden ist, wie Phenyl(C₁-C₁₂)alkyl. Bevorzugt sind aromatische Gruppen, insbesondere Phenyl, die direkt an ein Siliziumatom gebunden ist.
Soweit der Rest R¹ keine aromatische Gruppe enthält, umfaßt er vorzugsweise die für R genannte Definition. Hinsichtlich weiterer bevorzugter Definitionen der Organohydrogensiloxane b) sowie der möglichen Herstellungsverfahren kann auf die Erläuterungen zu den nachfolgend beschriebenen Komponenten b1), b2) und b3) verwiesen werden, die entsprechend für die Organohydrogensiloxane b) gelten.

Die bevorzugte Menge der Organohydrogensiloxane b) liegt bei 0,2 bis 60 Gew.-Teilen bezogen auf 100 Gewichtsteilen der Komponente a).

Die Komponente b) umfasst die Komponenten b1), b2) und gegebenenfalls die Komponente b3), wobei
b1) mindestens ein Organohydrogensiloxan mit mindestens zwei SiH-Einheiten pro Molekül und einem Gehalt von mehr als 7 mmol SiH/ g, das keine aromatischen Gruppen enthält, ist,
b2) mindestens ein Organohydrogensiloxan mit mindestens zwei SiH-Einheiten pro Molekül und mindestens einer im Molekül enthaltenen aromatischen Gruppe ist,
   und die gegebenenfalls vorliegende Komponente
b3) mindestens ein Organohydrogensiloxan mit mindestens zwei SiH-Einheiten pro Molekül und einem Gehalt von weniger als 7 mmol SiH/ g, das keine aromatischen Gruppen enthält, ist.

Das Organohydrogensiloxan b1) ist bevorzugt ein lineares, verzweigtes, oder cyclisches Polysiloxan, das die folgenden Siloxy-Einheiten aufweisen kann: 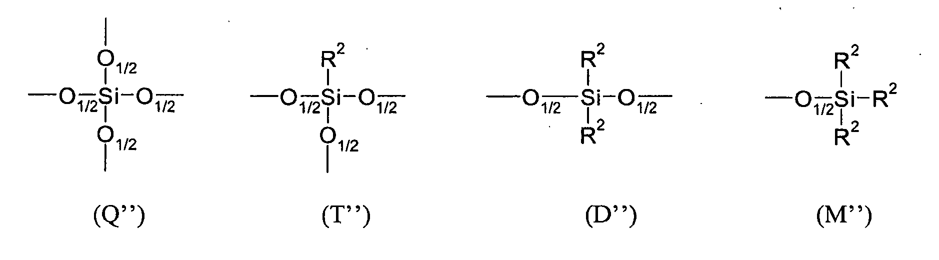 worin die Substituenten R² gleich oder verschieden sein können und aus der Gruppe ausgewählt werden, die besteht aus
- Wasserstoff,
- einem geradkettigen, verzweigten oder cyclischen Alkylrest mit bis zu 12 Kohlenstoffatomen,
- einem geradkettigen, verzweigten oder cyclischen Alkenylrest mit bis zu 12 Kohlenstoffatomen,
- Hydroxyl und
- einem geradkettigen, verzweigten oder cyclischen Alkoxyrest mit bis zu 6 Kohlenstoffatomen,
oder zwei Substituenten R¹ aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen,
Soweit der Rest R² keine aromatische Gruppe enthält, umfaßt er vorzugsweise die für R genannte Definition mit der Maßgabe, dass SiH-Gehalt mehr als 7 mmol/g beträgt.

Die Organohydrogensiloxane b1) im Sinne der Erfindung sind vorzugsweise lineare, cyclische oder verzweigte Organopolysiloxane aus mindestens einer der Einheiten Q", T", D", M", die mehrheitlich (mehr als 50 mol-%) MeHSiO- bzw. Me₂HSiO_{0,5}-Einheiten neben anderen Organosiloxyeinheiten, vorzugsweise Dimethylsiloxyeinheiten, enthalten können. Der SiH-Gehalt dieser Organohydrogensiloxane ist auf > 7 mmol SiH/g begrenzt, vorzugsweise liegt er bei 10 - 16,7 mmol/g. Diese Siloxane sind vorzugsweise bei Raumtemperatur flüssig bzw. siloxanlöslich, d.h. sie weisen bevorzugt weniger als 1000 Siloxyeinheiten auf. Die Zahlder MeHSiO-Einheiten liegt vorzugsweise bei 3 bis 200, besonders bevorzugt bei 15 bis 60.

Bevorzugte Ausführungsformen der Organohydrogensiloxane b1) schließen lineare oder cyclische Organohydrogensiloxane der folgenden Formeln ein: 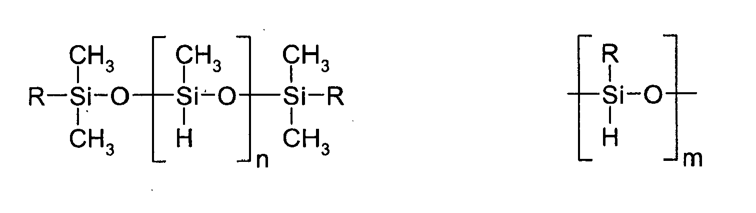 worin n = 1 bis 1000 und m = 3 bis 10

In einer besonders bevorzugten Ausführungsform kann das Organohydrogensiloxan b1) auch [(Me₂HSiO_{0,5})₄OSiO] oder [(Me₂HSiO_{0,5})_{0,2-4}OSiO] ₁₋₅₀₀ sein.

Die Organohydrogensiloxane b1) können nach an sich bekannten Verfahren, z.B. einer sauren Äquilibrierung oder Kondensation, hergestellt werden (wie. z.B. in US 5,536,803 Spalte Zeile 43-58).

Die Organohydrogensiloxane b1) können auch Umsetzungsprodukte sein, die aus einer Hydrosilylierung von Organohydrogensiloxanen mit alkenylgruppenhaltigen Siloxanen in Gegenwart der Katalysatoren c) hervorgegangen sind, wobei der resultierende SiH-Gehalt innerhalb der oben definierten Grenze von mehr als 7 mmol/g bleiben muß. Dabei resultieren Alkandiylgruppen-verbrückte Organohydrogensiloxane.

Die Organohydrogensiloxane b1) können auch Umsetzungsprodukte sein, die aus der Kondensation von z.B. Organohydrogenalkoxysiloxanen mit der Komponente d) die zu den in der US 4,082,726 z.B. Spalte 5 u. 6 beschriebenen Strukturen führen, wobei der resultierende SiH-Gehalt innerhalb der oben definierten Grenze von mehr als 7 mmol/g bleiben muß.

Die bevorzugte Menge der Organohydrogensiloxane b1) liegt bei 0,1 bis 10 Gew.-Teilen bezogen auf 100 Gewichtsteilen der Komponente a).

Die Organohydrogensiloxane b2) sind vorzugsweise lineare, cyclische oder verzweigte Organopolysiloxane, die mindestens eine der die folgenden Q"', T"', D"', M"' - Siloxy-Einheit aufweisen können, die mehrheitlich (mehr als 50 mol-%) Organosiloxyeinheiten enthalten, die keine SiH-Gruppen, wie sie z.B. MeHSiO- bzw. Me₂HSiO_{0,5} - darstellen. Neben anderen Organosiloxyeinheiten enthalten diese stattdessen, vorzugsweise Dimethylsiloxy-, Trimethylsiloxy-, Methylsiloxy- , Silicat-, Diphenylsiloxy. Phenylmethylsiloxy oder Vinylmethylsiloxy-Einheiten. Der SiH-Gehalt dieser Organohydrogensiloxane ist auf < 7 mmol SiH/g begrenzt,:

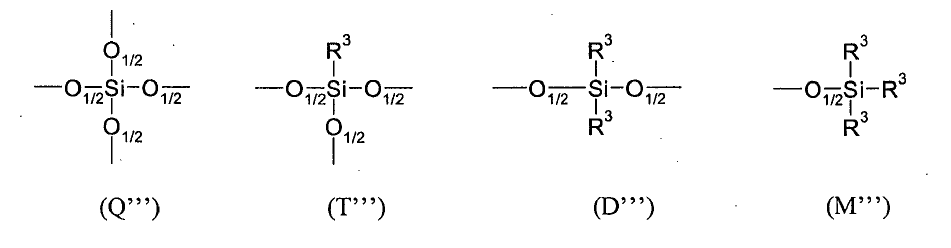

Die Substituenten R³ der Organohydrogensiloxane b2) können gleich oder verschieden sein und aus der Gruppe ausgewählt werden, die besteht aus
- Wasserstoff,
- einem geradkettigen, verzweigten oder cyclischen Alkylrest mit bis zu 12 Kohlenstoffatomen, der gegebenenfalls mit einer aromatischen Gruppe substituiert sein kann,
- einem geradkettigen, verzweigten oder cyclischen Alkenylrest mit bis zu 12 Kohlenstoffatomen, oder dessen epoxidiertes Derivat,
- einer aromatischen Gruppe,
- Hydroxyl und
- einem geradkettigen, verzweigten oder cyclischen Alkoxyrest mit bis zu 5 Kohlenstoffatomen,
oder zwei Gruppen R³ aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen,
mit der Maßgabe, dass das Organohydrogensiloxan b2) mindestens eine aromatische Gruppe im Molekül aufweist.

Die aromatische Gruppe kann gegebenenfalls substituiert sein. Es können wahlweise bevorzugt ein bis drei Substituenten ausgewählt zum Beispiel aus Alkyl, Alkoxy, Alkylen, Alkylenoxy mit jeweils bis zu 12 Kohlenstoffatomen und Halogen, bevorzugt Fluor, vorliegen. Die aromatische Gruppe kann direkt an ein Siliziumatom gebunden oder als Substituent einer Alkylgruppe, die an ein Siliziumatom gebunden ist, vorliegen. Bevorzugte aromatische Einheiten als Substituent R³ schließen zum Beispiel ein: aromatische Einheiten, bei denen die aromatische Gruppe direkt an ein Siliziumatom gebunden ist, wie Phenyl, C₁-C₁₀-Alkylphenyl, C₂-C₁₀-Alkylenphenyl, C₁-C₁₀-Alkoxyphenyl, C₂-C₁₀-Alkylenoxyphenyl, Halogenphenyl und Naphthyl, und aromatische Einheiten, bei denen die aromatische Gruppe via eine Alkylgruppe mit dem Siliziumatom verbunden ist, wie Phenyl(C₁-C₁₂)alkyl. Bevorzugt ist Phenyl, das direkt an ein Siliziumatom gebunden ist.
Soweit der Rest R³ keine aromatische Gruppe enthält, umfaßt er vorzugsweise die für R genannte Definition.
Die Siloxyeinheiten können untereinander statistisch verteilt oder blockartig in beliebiger Reihenfolge angeordnet vorliegen.

Die Organohydrogensiloxane b2) besitzen zweckmäßig eine Viskosität von 1 bis 50000 mPa.s bei 20°C vorzugsweise liegt die Viskosität bei 10-5000 mPa.s. bzw. sie sind unter 90°C schmelzende Feststoffe mit Schmelzviskositäten diese Bereiches oder Feststoffe, die in üblichen Lösungsmiteln oder Siloxanpolymeren löslich sind,

Bei den Arylsiloxyeinheiten handelt es sich bevorzugt um Diarylsiloxy, Methylarylsiloxy oder trifunktionelle Arylsiloxy-Einheiten, besonders bevorzugt sind Diphenylsiloxy- und 2-Phenylethylenmethylsiloxy- /(Styryl)(methyl)siloxy-Einheiten.

Der Gehalt an aromatischen Gruppen liegt zweckmäßig bei 1 bis 67 mol % , vorzugsweise 2 - 20 mol % , besonders bevorzugt 2 - 11,8 mol % bezogen auf die an Si gebundenen organischen Reste, wobei SiH nicht als organische Gruppe gerechnet wird.

Daneben können MeHSiO- bzw. Me₂HSiO_{0,5}-Einheiten neben anderen Organosiloxyeinheiten, vorzugsweise Dimethylsiloxyeinheiten vorliegen.
Der SiH-Gehalt liegt zweckmäßig bei etwa 0,1 - 16,7 mmol SiH /g und bevorzugt bei 3-15 mmol SiH/g.

Aus wirtschaftlichen Gründen wird man den Anteil der aromatischen Siloxyeinheiten minimieren und solche Einheiten wählen, die preiswert zugänglich sind.

Die Organohydrogensiloxane b2) können nach an sich bekannten Verfahren hergestellt werden ( z.B. der sauren Äquilibrierung bzw. Kondensation von linearen oder cyclischen Siloxanen, wie in US 5,536,803 beschrieben, diedie entsprechenden Organosiloxyeinheiten getrennt enthalten, oder durch Cohydrolyse entsprechender Organochlorsilane und anschließender saurer Äquilibrierung bzw.Kondensation. ).

Die bevorzugte Menge der Organohydrogensiloxane b2) liegt bei 0,1 bis 20 Gew.-Teilen bezogen auf 100 Gewichtsteilen der Komponente a).

Die Organohydrogensiloxane b3) im Sinne der Erfindung sind Organohydrogensiloxane gemäß der vorstehenden Definition der Komponente b1) mit der Maßgabe, das sie einen Gehalt von weniger als 7 mmol SiH/g, mindestens aber 2 SiH-Einheiten pro Molekül aufweisen. Die Organohydrogen-siloxane b3) werden optional eingesetzt. Sie finden insbesondere dann Anwendung, wenn die gummimechanischen Eigenschaften, wie die Weiterreißfestigkeit, oder Alterungseigenschaften, wie die Heißluftstabilität, optimiert werden müssen.

Das Kennzeichen von b3) ist ein SiH-Gehalt, der unter 7 mmol SiH/ g, vorzugsweise bei 0,2 - 6,9 mmol/g, liegt. Die Zahl der Siloxy-Einheiten liegt im Falle der Organohydrogensiloxane b3) bevorzugt bei 3 bis 1000, bevorzugter jedoch bei 10 bis 200, noch bevorzugter bei 20-50.

Die Siloxy-Einheiten in b3) sind bevorzugt so abgestimmt, dass flüssige bzw. siloxanlösliche Hydrogensiloxane mit einer Viskosität von 0,5- 50000 mPa.s bei 20 °C resultieren. Die Siloxane b3) umfassen auch die unter 90°C schmelzenden Feststoffe mit Schmelzviskositäten diese Bereiches oder Feststoffe, die in üblichen Lösungsmiteln oder Siloxanpolymeren löslich sind,

Die bevorzugten Vertreter sind Trimethyl- bzw. Hydrogendimethylsiloxy-endgestoppte Polymethylhydrogendiorganosiloxane.

Es können, wie bei b1) beschrieben, auch durch Hydrosilylierung mit a) erzeugte Umsetzungsprodukte oder durch Kondensation mit a) oder d) erzeugte Umsetzungsprodukte eingesetzt werden.

Die Herstellung der Organohydrogensiloxane b3) erfolgt in an sich bekannter Weise, wie zum Beispiel in US 5,536,803, wobei der SiH-Gehalt durch die Wahl geeigneter Gewichtsverhältnisse der Hydrogenorganosiloxy- zu den Organosiloxyeinheiten eingestellt wird.

Die bevorzugte Menge der Organohydrogensiloxane b3) liegt bei 0 bis 30 Gew.-Teilen bezogen auf 100 Gewichtsteilen der Komponente a).

Die erfindungsgemäße, additionsvernetzende Siliconkautschukmischung enthält c) mindestens einen Pt- Ru- und/oder Rh-Katalysator für die Vernetzungsreaktion bzw. Hydrosilylierung. Platin-Katalysatoren sind bevorzugt. Besonders bevorzugte Katalysatoren c) sind vorzugsweise Pt (0)-Komplexe, Pt (II)- Komplexe oder deren Salze oder Pt(IV)-Komplexe oder deren Salze mit Liganden, wie Alkenylsiloxanen, Cycloalkyldienen, Alkenen, Halogenen bzw. Pseudohalogen, Carboxyl-, S- N- oder P-Gruppen-haltigen Liganden als Komplexbildner in katalytischen Mengen von 1 bis 1000 ppm bevorzugt 1-100 ppm, besonders bevorzugt 1 - 20 ppm, bezogen auf Metall. Ru- und/oder Rh-Katalysatoren schließen beispielsweise ein: Rh- oder Ru-Komplexe bzw. Salze, wie Di-µ,µ'-dichloro-di(1,5-cyclooctadien)dirhodium. Als Rh-Verbindungen sind ebenfalls die in J. Appl. Polym. Sci 30, 1837-1846 (1985) beschriebenen Verbindungen einsetzbar.

Die erfindungsgemäße, additionsvernetzende Siliconkautschukmischung enthält wahlweise mindestens einen Inhibitor. Inhibitoren im Sinne der Erfindung sind alle gängigen Verbindungen, die bisher schon für die Verzögerung bzw. Inhibierung der Hydrosilylierung eingesetzt wurden. Beispiele für solche bevorzugten Inhibitoren sind Vinylmethylsiloxane wie z.B. 1,3-Divinyl-tetramethyldisiloxan, 1,3,5,7-Tetravinyl-1,3,5,7-tetramethylcyclotetrasiloxan, Alkinole wie 2-Methylbutinol-(2) oder 1-Ethinylcyclohexanol US 3,445,420 in Mengen von 50 bis 10.000 ppm sowie alle weiteren bekannten S-, N- bzw. P-haltigen Inhibitoren (DE-A 36 35 236), die es ermöglichen, die Reaktion der durch reine Pt-, Ru-, oder Rh-Katalysatoren der Komponente c) bewirkten Hydrosilylierung zu verzögern .

Die erfindungsgemäße, additionsvernetzende Siliconkautschukmischung enthält weiterhin mindestens ein Alkoxysilan und/oder Alkoxysiloxan d), die mindestens eine Epoxygruppe aufweisen. Die Epoxygruppe ist zweckmäßig eine über eine Alkandiylgruppe an Si gebundene Epoxygruppe (Epoxy-(CH2)x-Si). Bevorzugt sind solche, die in der Alkoxyfunktion maximal 5 C-Atome aufweisen und die üblicherweise 2, bevorzugter aber 3 Alkoxygruppen pro Molekül tragen. Hierzu gehören Epoxysilane und -siloxane wie sie in der EP 691 364 beschrieben werden.

Die Alkoxysilane d) umfassen auch Glycidoxypropyltrialkoxysilane sowie Dialkoxysilane oder 2-(3,4-Epoxycyclo-hexyl)ethyltrialkoxysilan, Epoxylimonyltrialkoxysilane, epoxydierte Norbornenylethyltrialkoxysilane bzw. Ethylidennorbornyltrialkoxysilane., sowie andere C₃ bis C₁₄ epoxydierte Alkenyl- bzw. Alkenylaryltrialkoxysilane, epoxydierte Trisalkoxysilylpropylallylcyanurate bzw. -Isocya-nurate sowie jeweils ihre Dialkoxyderivate, Acryl- bzw. Methacryloxypropyltrialkoxysilane sowie ihre Kondensationsprodukte nach Reaktion mit Wasser, Alkoholen oder Silanolen bzw. Siloxandiolen.

Bevorzugt sind Mono(epoxyorgano)trialkoxysilane, wie z.B. Glycidoxypropyltrimethoxysilan,2-(3,4-epoxycyclohexyl)ethyltrialkoxysilan, oder Methacryloxypropyltrimethoxysilan und/oder deren Siloxane, besonders bevorzugt sind Gemische aus Glycidoxypropyltrimethoxy- und Methacryloxypropyltrimethoxysilan in Mengen von 0,01 bis 10 Teilen, bezogen auf 100 Teile der Komponente a), bzw. etwa 0,002 bis 9,1 Gew.-% bezogen auf die Gesamtmenge der additionsvernetzenden Siliconkautschukmischung.

Es können, wie bei der Komponente b1) beschrieben, auch durch Hydrosilylierung erzeugte Umsetzungsprodukte von d) mit a) und b) bzw. durch Kondensation erzeugte Umsetzungsprodukte von d) mit b) eingesetzt werden.

Die erfindungsgemäße, additionsvernetzende Siliconkautschukmischung enthält weiterhin wahlweise einen oder mehrere, gegebenenfalls oberflächlich modifizierten Füllstoff (f). Diese schließen beispielsweise ein: Alle feinteiligen Füllstoffe, d.h. mit Partikeln kleiner 100 µm, die die Pt-katalysierte Vernetzungsreaktion nicht stören, so dass elastomere Beschichtungen, Formkörper oder Extrudate erzeugt werden können.

Das können mineralische Füllstoffe wie Silikate, Carbonate, Nitride, Oxide, Ruße oder Kieselsäuren sein. Vorzugsweise handelt es sich solche Füllstoffe, die die gummimechanischen Eigenschaften verstärkenden, wie z.B. pyrogene oder gefällte Kieselsäure mit BET-Oberflächen zwischen 50 und 400 m²/g, die auch oberflächlich behandelt sein können, in Mengen von 0 bis 300 Gewichtsteilen, vorzugsweise 10 bis 50 Teilen, bezogen auf 100 Gewichtsteile der Komponente a).

Füllstoffe mit BET-Oberflächen oberhalb 50 m²/g erlauben die Herstellung von Siliconelastomeren mit verbesserten gummimechanischen Eigenschaften. Die gummimechanische Festigkeit und die Transparenz steigen bei z.B. pyrogen Kieselsäuren, wie Aerosil, HDK, Cab-O-Sil, mit deren Oberfläche.

Darüberhinaus können zusätzlich oder ersatzweise sogenannte Extender-Füllstoffe, wie z.B. Quarzmehl, Diatomeenerden, Cristobalitmehle, Glimmer, Aluminumoxide, Ti-, Fe-, Zn-oxide, Kreiden oder Ruße mit BET-Oberflächen von 1-50 m²/g Verwendung finden.

Mit dem Begriff Füllstoff f) sind die Füllstoffe inklusive ihrer an die Oberfläche gebundenen Hydrophobierungsmittel bzw. Dispergierungsmittel bzw. Process-Aids, gemeint, die die Wechselwirkung des Füllstoffes mit dem Polymer, z.B. die verdickende Wirkung beinflussen. Bei der Oberflächenbehandlung der Füllstoffe handelt es ich vorzugsweise um eine Hydrophobierung mit Silanen oder Siloxanen. Sie kann z.B. 'in situ' durch den Zusatz von Silazanen, wie Hexamethylsilazan und/oder Divinyltetramethyldisilazan, und Wasser erfolgen, die 'In-situ' Hydrophobierung ist bevorzugt. Sie kann auch mit anderen gängigen Füllstoffbehandlungsmitteln, wie Vinylalkoxysilanen, wie z.B. Vinyltrimethoxysilan, Oragnosiloxandiolen mit Kettenlängen von 2 - 50, um reaktive Stellen für die Vernetzungsreaktion bereitzustellen, sowie mit Fettsäure- oder Fettalkohol-Derivaten erfolgen.

Die erfindungsgemäße, additionsvernetzende Siliconkautschukmischung enthält weiterhin wahlweise mindestens einen Hilfsstoff (g), wie z.B. Phenylsiloxan-Öle, die selbstschmierende Vulkanisate liefern, wie z.B. Copolymere aus Dimethylsiloxy- und Diphenylsiloxy- oder Methylphenylsiloxygruppen sowie Polysiloxane mit Methylphenylsiloxygruppen mit einer Viskosität von vorzugsweise 0,1 - 10 Pas oder Farbmittel bzw. Farbpigmente als Farbpasten, zusätzliche Formtrennmittel wie Fettsäureoder Fettalkoholderivate, Extrusionshilfsmittel, wie Borsäure oder PTFE-Pasten, Biocide wie z.B. Fungizide, Heißluftstabilisatoren, wie Fe-, Ti-, Ce-, Ni-, Co-Verbindungen. Die Menge der Hilfsstoffe beträgt bevorzugt 0 bis 15 Gewichtsteile bezogen auf 100 Gewichtsteile der Komponente a) und liegt bevorzugt unterhalb von 13 Gew-%, bezogen auf die Gesamtmenge der Kautschukmischung.

Gegenstand der Erfindung ist weiterhin ein Verfahren zur Herstellung der additionsvernetzenden Siliconkautschukmischung, welches das Vermischen der Komponenten a) bis d) und wahlweise der Komponenten e) bis g) umfasst.

Das Vermischen erfolgt dabei vorzugsweise mit den für hochviskose Pasten geeigneten Mischern, wie z.B. Knetern, Dissolvern oder Planetenmischern unter Inertgasatmosphäre. In einer bevorzugten Ausführungsform vermischt man die sogenannten verstärkenden Füllstoffe, das sind diejenigen mit BET-Oberflächen oberhalb 50 m²/g in der Weise, dass man sie beim Mischprozess 'in-situ' hydrophiert.

Dabei werden vorzugsweise die Organopolysiloxane a), Füllstoffe und das Hydrophobierungsmittel, vorzugsweise Hexamethyldisilazan und/oder Divinyltetramethyldisilazan mit Wasser in Gegenwart von Kieselsäuren Komponente f), bevorzugt bei Temperaturen von 90 bis 100°C mindestens 20 Minuten in einem für hochviskose Materialien geeigneten Mischaggregat, wie z.B. einem Kneter, Dissolver oder Planetenmischer, gerührt und anschließend bei 150 bis 160°C von überschüssigen Hydrophobierungsmitteln und Wasser zunächst durch Verdampfen bei Normaldruck und dann im Vakuum bei einem Druck von 100 bis 20 mbar befreit. Die weiteren Komponenten werden anschließend zweckmäßig über 10 bis 30 Minuten eingemischt.

In einer bevorzugten Ausführungsform des Verfahrens zur Herstellung der additionsvernetzenden Siliconkautschukmischung erfolgt zunächst die Herstellung mindestens einer Teilmischung, die mehr als eine aber nicht alle der Komponenten a) bis g) umfasst, beinhaltet.

Diese Aufteilung in Teilmischungen dient der besseren Handhabung der reaktiven Mischung aus den Bestandteilen a) bis d) sowie gegebenenfalls e) bis g). Insbesondere die Bestandteile b1), b2) und b3) sollten zur Lagerung vorzugsweise vom Katalysator c) getrennt aufbewahrt werden. Der Bestandteil d) und der Inhibitor e) können mehr oder weniger vorteilhaft in jeder der Komponenten vorgehalten werden, soweit nicht gleichzeitig die miteinander reagierenden Komponenten a), b) und c) nebeneinander vorliegen.
In einer bevorzugten Ausführungsform des erfindungsgemäßen Verfahrens zur Herstellung der additionsvernetzenden Siliconkautschukmischung wird zunächst eine erste Teilmischung durch Zusammengeben von
- mindestens einem Organopolysiloxan a)
- gegebenenfalls mindestens einem Füllstoff f)
- gegebenenfalls mindestens einem Hilfsstoff g),
- mindestens einem Katalysator c) und
- gegebenenfalls mindestens einem Alkoxysilan und/oder Alkoxysiloxan d), hergestellt ,
eine zweite Teilmischung durch Zusammengeben von
- gegebenenfalls einem Organopolysiloxan a),
- mindestens einem Organohydrogensiloxan b1),
- mindestens einem Organohydrogenpolysiloxan b2),
- gegebenenfalls mindestens einem Organosiloxan b3),
- gegebenenfalls mindestens einem Füllstoff f),
- gegebenenfalls mindestens einem Alkoxysilan und/oder Alkoxysiloxan d),
- gegebenenfalls mindestens einem Inbibitor e) und
- gegebenenfalls mindestens einem Hilfsstoff g) hergestellt ,
und die beiden Teilmischungen anschließend vermischt werden. In einer weiteren bevorzugten Ausführungsform des erfindungsgemäßen Verfahrens zur Herstellung der additionsvernetzenden Siliconkautschukmischung wird zunächst eine erste Teilmischung durch Zusammengeben von
- mindestens einem Organopolysiloxan a),
- gegebenenfalls mindestens einem Füllstoff f)
- gegebenenfalls mindestens einem Hilfsstoff g),
- mindestens einem Katalysator c) und
- gegebenenfalls mindestens einem Alkoxysilan und/oder Alkoxysiloxan d) sofern diese nicht in der zweiten oder dritten Teilmischung enthalten sind, hergestellt ,
eine zweite Teilmischung durch Zusammengeben von
- mindestens einem Organohydrogensiloxan b1),
- gegebenfalls mindestens einem Organopolysiloxan a),
- gegebenenfalls mindestens einem eine aromatische Gruppe enthaltenden Organohydrogensiloxan b2), sofern nicht in der dritten Teilmischung enthalten,
- gegebenenfalls mindestens einem Organosiloxan b3),
- gegebenenfalls mindestens einem Füllstoff f),
- gegebenenfalls mindestens einem Alkoxysilane und/oder Alkoxysiloxane d), sofern nicht in der ersten oder dritten Teilmischung enthalten,
- gegebenenfalls mindestens einem Inhibitor e) und
- gegebenenfalls mindestens einem Hilfsstoffe g)
   hergestellt,
eine dritte Teilmischung durch Zusammengeben von
- mindestens einem eine aromatische Gruppe enthaltenden Organohydrogensiloxan b2) und/oder
- mindestens einem Alkoxysilan und/oder Alkoxysiloxan d),
jeweils soweit die Komponenten b2) bzw. d) nicht in der ersten oder zweiten Teilmischung enthalten sind,
- gegebenenfalls mindestens einem Organohydrogensiloxan b1), soweit nicht in der zweiten Teilmischung enthalten,
- gegebenenfalls mindestens einem Organohydrogensiloxan b3), soweit nicht in der zweiten Teilmischung enthalten,
- gegebenenfalls mindestens einem Organopolysiloxan a),
- gegebenenfalls mindestens einem Füllstoff f) und
- gegebenenfalls mindestens einem Hilfsstoff g)
   hergestellt und die drei Teilmischungen anschließend vermischt.

Der Begriff "Teilmischung" bzw. "Reaktivkomponente" schließt auch den Fall ein, dass die Teilmischung nur eine Komponente enthält.

Gegenstand der Erfindung sind weiterhin additionsvernetzte Silikonkautschukmischungen, die durch Vernetzen bzw. Vulkanisieren der erfindungsgemäßen, additionsvernetzenden Silikonkautschukmischungen erhalten werden. Das Vernetzen bzw. Vulkanisieren erfolgt je nach Reaktivität der additionsvernetzenden Silikonkautschukmischungen in einem Temperaturbereich von 0 bis 300 °C.

Das Vernetzen kann gegebenenfalls unter Normaldruck, Vakuum bis 20 mbar oder Überdruck in Gegenwart von Umgebungsluft erfolgen. Überdruck in Gegenwart von Umgebungsluft schließt das Spritzgießen und das Vernetzen auf einer Substratoberfläche unter Spritzbedingungen, d.h. bis zu 300 bar bezogen auf die Flächeneinheit des Formkörpers.

Bei den additionsvernetzten Silikonkautschukmischungen handelt es sich im allgemeinen um elastomere Formkörper.

Gegenstand der Erfindung ist weiterhin ein Verfahren zur Herstellung von VerbundFormteilen **dadurch gekennzeichnet, dass** mindestens eine der erfindungsgemäßen, additionsvernetzenden Siliconkautschukmischungen auf einem mineralischen, metallischen, duroplastischen und/oder thermoplastischen Substrat zur Vernetzung gebracht wird.

Ein bevorzugtes Substrat ist ein thermoplastisches Substrat, besonders bevorzugt ist das Substrat aus Polybutylenterephthalat, Polyamid oder Polyphenylensulfid.

In einer bevorzugten Ausführungsform des erfindungsgemäßen Verfahrens zur Herstellung der Verbund-Formteile wird die erfindungsgemäße, additionsvernetzende Siliconkautschukmischung auf der Oberfläche eines zuvor hergestellten thermoplastischen Formteils gegebenenfalls unter Aufstreichen, Giessen, Kalandrieren, Rakeln sowie Walzen vorzugsweise bei Normaldruck aufgetragen, anschließend bei Temperaturen von 0 bis 300°C, bevorzugt 50 bis 250°C, vernetzt und dabei zur Haftung gebracht.

Besonders bevorzugt erfolgt die Herstellung des bevorzugt thermoplastischen Formteils unmittelbar vor dem Auftragen der additionsvernetzenden Siliconkautschukmischung.

In einer weiteren bevorzugten Ausführungsform des erfindungsgemäßen Verfahrens zur Herstellung der Verbund-Formteile wird die erfindungsgemäße, additionsvernetzende Siliconkautschukmischung auf der Oberfläche eines bevorzugt unmittelbar zuvor in einem Spritzgießwerkzeug spritzgegossenen thermoplastischen Formteils bei Temperaturen von 50 bis 300°C vulkanisiert and dabei zur Haftung gebracht wird.

Bei den vorstehend genannten Verfahren zur Herstellung der Verbund-Formteile wird additionsvernetzende Silikonkautschukmischung im allgemeinen durch Einspritzen in den Vulkanisieraum, in dem sich die Oberfläche des Substrates befindet, auf das Substrat gebracht. Dabei wird die additionsvernetzende Silikonkautschukmischung bevorzugt unmittelbar vorher durch Vermischen der Komponenten a) bis g) hergestellt. Besonders bevorzugt werden vorher die oben beschriebenen reaktiven Teilmischungen hergestellt, die anschließend vermischt werden. Die reaktiven Teilmischungen können dabei auch direkt auf das zu beschichtende Substrat aufgespritzt und anschließend vernetzt werden.

Die Substrate, die mit den erfindungsgemäßen vernetzten Siliconkautschukmischungen beschichtet sind, schließen weiterhin zum Beispiel ein: Glas, gegebenenfalls vorbehandeltes Metall oder vorzugsweise, gegebenenfalls vorbehandelter Kunststoff. Als thermoplastischer Kunststoff wird bevorzugt z.B. Polyethylenterephthalat, Polybutylenterephthalat, vollaromatische Polyester, flüssigkristalline Polyester, Polycyclohexylenterephthalat, Polytrimethylenterephthalat, aliphatische Polyamide, Polyphthalamid, partiell aromatische Polyamide, Polyphenylamid, Polyamidimide, Polyetherimide, Polyphenylenoxid, Polysulfon, Polyethersulfon, aromatische Polyetherketone, PMMA, Polycarbonat, ABS-Polymere, Fluorpolymere, syndiotaktisches Polystyrol, Ethylen-Kohlenmonoxid-Copolymere, Polyphenylensulfon, Polyarylensulfid, und Polyphenylensulfoxid. Duroplastische Kunststoffe schließen zum Beispiel ein: Melamin-, Urethan-, Epoxid- , Phenylenoxid- oder Phenolharze.

Während des Vernetzungs- bzw. Vulkanisationsprozesses werden diese Substratoberflächen mit mindestens einer der erfindungsgemäßen additions-vernetzbaren bzw. vernetzenden Siliconkautschukmischung zur Haftung gebracht.

Die in zwei bis drei reaktive Teilmischungen aufgeteilte Siliconkautschukmischung wird vor der Vulkanisation, durch Mischen in einem Spritzgießautomaten oder in einem vorgelagerten Mischkopf und gegebenenfalls anschließendem Statikmischer zusammengeführt, vermischt und dann bei 0-300°C vernetzt und zur Haftung gebracht. Vorzugsweise spritzt man die Komponenten nach dem Vermischen in ein Formwerkzeug bei erhöhter Temperatur von 50-250°C ein. Das die Siliconkautschukmischung aufnehmende Formnest dieses Werkzeuges braucht nicht beschichtet oder mit Formtrennmitteln behandelt zu werden, um die Haftung an der Werkzeugoberfläche für die Entformung ausreichend klein zu halten. Für die konstruktive Gestaltung der Formen die vorzugsweise nacheinander folgend mit einem duroplastischen oder thermoplastischen sowie einem elastomeren Material beschickt werden, findet man Hinweise in Schwarz; Ebeling; Furth: Kunststoffverarbeitung, Vogel-Verlag, ISBN: 3-8023-1803-X

Walter Michaeli: Einführung in die Kunststoffverarbeitung, Hanser-Verlag, ISBN 3-446-15635-6.

Um die Formen führen und geschlossen halten zu können, wählt man vorzugsweise Spritzgieß(guss)automaten mit Zuhaltekräften von größer 3000 N/cm² Formteiloberfläche.

Für die erfindungsgemäßen Verfahren sind alle gängigen Spritzgussautomaten einsetzbar. Die technische Auswahl wird von der Viskosität der Siliconkautschukmischung sowie der Formteildimension bestimmt.

Die Mengenverhältnisse der eingesetzten reaktiven Teilmischungen entsprechen denen, die nach dem Vermischen die erfindungsgemäss beschriebenen Siliconkautschukmischungen ergeben. Sie werden durch das gewünschte Si-Alkenyl zu SiH-Verhältnis sowie die notwendigen Mengen an haftvermittelnden Bestandteilen der Kompononten b1) bis b3) bestimmt.

Gegenstand der Erfindung ist zudem die Verwendung der erfindungsgemäßen additionsvernetzenden Siliconkautschukmischung zur Herstellung von Verbund-Formteilen wie z.B. Dicht- und/oder Dämpfungs- Halterungselementen, Griffen, Tastaturen, Schalter, Duschköpfen, Lampenfassungen oder sonstigen Befestigungen, die gleichzeitig ein Thermoplast- und ein Siliconkautschukteil aufweisen.

### Ausführungsbeispiele

### Beispiel 1 (erfindungsgemäß)

### Herstellung einer Basismischung BM1 und einer ersten reaktiven "Teilmischung ", der Reaktivkomponente (Ia):

In einem Dissolver wurden 19 Teile dimethylvinylsiloxyendgestopptes Polydimethylsiloxan a1) mit einer Viskosität von 10 Pa.s und 35 Teile dimethylvinylsiloxyendgestopptes Polydimethylsiloxan a2) mit einer Viskosität von 65 Pa.s mit 5,1 Teilen Hexamethyldisilazan und 1,8 Teilen Wasser gemischt, anschließend mit 23,5 Teilen pyrogener Kieselsäure f) mit einer BET-Oberfläche von 300 m²/g (Aerosil 300® Degussa) vermischt, auf ca. 100°C erwärmt, ca. 1 h gerührt und danach bei 150 bis 160°C von Wasser und überschüssigen Resten des Hydrophobierungsmittels befreit (zum Schluß im Vakuum bei p = 20 mbar) und anschließend mit 19 Teilen a1) und 0,5 Teilen eines dimethylvinylsiloxyendgestoppten Polydimethylsiloxans a3) mit Methylvinylsiloxygruppen mit einem Vinylgehalt von 2 mmol/g und einer Viskosität von 0,2 Pa.s verdünnt. Es wird eine Basismischung BM1 erhalten.

Nach dem Erkalten wurden ca. 100 Teile der Basismischung BM1 mit 0,0135 Teilen einer Pt-Komplexverbindung c) mit Alkenylsiloxan als Liganden in Tetramethyltetravinylcyclotetrasiloxan (Pt-Gehalt: 15 Gew.-%) vermischt. Die bis hier zusammengeführten Mischungsbestandteile werden in den nachfolgenden Beispielen Reaktivkomponente Ia genannt.

### Herstellung einer zweiten Basismischung BM2 sowie einer zweiten Reaktivkomponente Ib:

In einem Dissolver wurden 20 Teile dimethylvinylsiloxyendgestopptes Polydimethylsiloxan a1) mit einer Viskosität von 10 Pa.s und 36 Teile dimethylvinylsiloxyendgestopptes Polydimethylsiloxan a2) mit einer Viskosität von 65 Pa.s mit 5,2 Teilen Hexamethyldisilazan und 1,9 Teilen Wasser gemischt, anschließend mit 24 Teilen pyrogener Kieselsäure f) mit einer BET-Oberfläche von 300 m²/g vermischt, auf ca. 100°C erwärmt, ca. 1 h gerührt und danach bei 150 bis 160°C von Wasser und überschüssigen Hydrophobierungsmittelresten befreit (zum Schluß im Vakuum bei p = 20 mbar) und anschließend mit 13 Teilen a1) verdünnt. Die erhaltene Mischung wird als Basismischung BM2 bezeichnet.
Nach dem Erkalten wurden zu 96 Teilen der Basismischung BM2 1 Teil eines Trimethylsilyl-endgestoppten Methylhydrogensiloxans b1) mit einem mittleren SiH-Gehalt von 15 mmol/g und einem mittleren Gehalt von 30 MeHSiO-Gruppen pro Molekül der Komponente b1), mit 1,9 Teilen eines Trimethylsilyl-endgestoppten Diphenylmethylhydrogen-dimethyl-polysiloxans b2) M₂D₇D^{H}₆D^{phe2}_{0,9} mit einem mittleren SiH-Gehalt von 4,9 mmol/g und einem mittleren Si-Phenyl-Gehalt von 1,5 mmol/g 6,5 Mol.% hervorgegangen aus einer anionischen Äquilibrierung mit 1,4 Teilen Glycidyloxypropyltrimethoxysilan als Komponente d) sowie mit 0,1 Teilen Ethinylcyclohexanol als Inhibitor e) gemischt. Man erhält die Reaktivkomponente Ib.

Die Abmischung aus Ia und Iab der erfindungsgemäßen Zusammensetzung im Gew.-Verhältnis 0,96 : 1 wird auf den in eine Vulkänisierform eingelegten Thermoplastteilen unter den in Tabelle 1 angegebenen Bedingungen vulkanisiert. Es wird bei allen geprüften Thermoplasten ein hervorragendes Haftungsergebnis erzielt.

### Beispiel 2 (erfindungsgemäß)

### Die Herstellung der Reaktivkomponente II b .

Die Herstellung der Basismischung BM3 erfolgt wie Basismischung BM2 in Beispiel 1 mit nachfolgender Abweichung.die es erlaubt mit gleichbleibender Reaktivkomponente Ia die durch die unterschiedliche Additivzugabe bedingten Dichteunterschiede weitgehend auszugleichen.

Die Basismischung BM3 enthält aber abweichend zur Basismischung BM1 in Beispiel 1 19 Teile dimethylvinylsiloxyendgestopptes Polydimethylsiloxan a1) mit einer Viskosität von 10 Pa.s, 35 Teile dimethyl-vinylsiloxyendgestopptes Polydimethylsiloxan a2) mit einer Viskosität von 65 Pa.s sowie 23,5 Teile pyrogene Kieselsäure f) mit einer BET-Oberfläche von 300 m²/g. Anschließend wird diese Mischung mit 13 Teilen a1) wie in Beispiel 1 verdünnt. Nach dem Erkalten wurden 93,6 Teilen der Basismischung BM3 mit 1 Teil eines Organohydrogensiloxans b1) wie in Beispiel 1 mit einem mittleren SiH-Gehalt von 15 mmol/g und einem mittleren Gehalt von 30 SiH-Gruppen pro Molekül, mit 1,9 Teilen eines Organohydrogensiloxans b2) mit einem mittleren SiH-Gehalt von 4,9 mmol/g und einem mittleren Si-Phenyl-Gehalt von 1,5 mmol/g wie in Beispiel 1, mit 1,4 Teilen Glycidyloxypropyltrimethoxysilan, mit 1,7 Teilen Methacryloxypropyltrimethoxysilan sowie mit 0,1 Teilen Ethinylcyclohexanol als Inhibitor vermischt. Man erhält Reaktivkomponente II b.
Die Reaktivkomponenten Ia und IIb wurden im Verhältnis 0,93 : 1 vermischt und auf den Thermoplasten wie in Beispiel 1 vulkanisiert.

Das Beispiel zeigt den Einfluß der Verwendung eines zusätzlichen Alkoxysilanes in der Komponente d)

### Beispiel 3 (Vergleichsbeispiel)

### Herstellung der Basismischung BM 2 wie in Beispiel 1:

96 Teilen der Basismischung BM2 wurden nach dem Erkalten mit 1 Teil eines Organohydrogensiloxans b3), 1,9 Teilen eines Organohydrogensiloxans b2) wie im Beispiel 1, mit 1,7 Teilen Methacryloxypropyltrimethoxysilan d) sowie mit 0,1 Teilen Ethinylcyclohexanol als Inhibitor e) vermischt. Man erhält die Reaktivkomponente IIIb. Reaktivkomponente Ia und III b werden wie in Beispiel 1 0,95: 1 vermischt und vulkanisiert.
Das Beispiel 3 zeigt, dass das Fortlassen der epoxy-haltigen Komponente d) die Haftung verschlechtert.

### Beispiel 4 (Vergleichsbeispiel)

### Herstellung der Basismischung BM3 wie in Beispiel 2:

Nach dem Erkalten von 93,6 Teilen der verbliebenen Basismischung BM3 wurde diese mit 2,0 Teilen eines Trimethysiloxyendgestoppten Methylhydrogen-dimethylsiloxans b3) und einem mittleren SiH-Gehalt von 7,3 mmol/g sowie einer mittleren Zahl von 20 SiH-Gruppen pro Molekül, mit 1,8 Teilen eines Organohydrogensiloxans b2) aus Beispiel 1 mit 1,4 Teilen Glycidyloxypropyltrimethoxysilan, mit 1,7 Teilen Methacryloxypropyltrimethoxysilan d) sowie mit 0,1 Teilen Ethinylcyclohexanol als Inhibitor e) vermischt. Man erhält die Reaktivkomponente IV b
Die Reaktivkomponente Ia und IVd wurden im Verhältnis 0,95 : 1 wie vorher vermischt und auf dem Thermoplast vulkanisiert.

Das Beispiel 4 zeigt, dass der Bestandteil b3) an Stelle von b1) weniger gute Haftungsergebnisse als Bestandteil b1) liefert.

### Beispiel 5 (Vergleichsbeispiel)

### Herstellung der Reaktivkomponente Vb. Die Herstellung der Basismischung BM2 erfolgt wie in Beispiel 1:

Nach dem Entgasen und Erkalten wurden 96 Teile der verbliebenen Basismischung BM2 mit 1,7 Teilen eines Organohydrogen-polysiloxans b1) mit einem mittleren SiH-Gehalt von 15 mmol/g wie in Beispiel 1 mit 1,4 Teilen Glycidyloxypropyltrimethoxysilan, mit 1,7 Teilen Methacryloxypropyltrimethoxysilan d) sowie mit 0,1 Teilen Ethinylcyclohexanol als Inhibitor e) vermischt.
Man erhält die Reaktivkomponente Vb. Die Reaktivkomponenten Ia und Vb wurden im Verhältnis 0,95: 1 wie vorher vermischt und auf den genannten Thermoplasten vulkanisiert.

Das Beispiel 5 zeigt, dass das Fortlassen des phenylhaltigen Si-H-Bestandteiles b2) die Haftung verschlechtert.

### Beispiel 6 (Vergleichsbeispiel)

### Herstellung der Reaktivkomponente VIb.

Die Herstellung der Basismischung BM2 erfolgt wie Beispiel 1. Nach dem Erkalten wurden 96 Teilen der Basismischung BM2 mit 1 Teil eines Organohydrogenpolysiloxans b1) mit einem mittleren SiH-Gehalt von 15 mmol/g wie in Beispiel 1, mit 1,9 Teilen eines Organohydrogenpolysiloxans b2) mit einem mittleren SiH-Gehalt von 5 mmol/g und einem mittleren Si-Phenylgehalt von 1,5 mmol/g wie in Beispiel 1 sowie mit 0,1 Teilen Ethinylcyclohexanol als Inhibitor e) vermischt. Man erhält die Reaktivkomponente VI b. Die Reaktivkomponenten Ia und VIb wurden im Verhältnis 0,97: 1 wie vorher vermischt und auf den genannten Thermoplasten vulkanisiert.
Das Beispiel 6 zeigt, dass das Fortlassen des Bestandteiles d) die Haftung verschlechtert.

### Herstellung und Bewertung der Verbundteile

Das Formwerkzeug war auf bis zu 300 °C heizbar. Die erfindungsgemäßen Siliconkautschukmischungen können zwar bis hin zu diesen Temperaturen verarbeitet und vulkanisiert werden, die erfindungsgemäßen Formteile wurden jedoch vorzugsweise bei Temperaturen auf der Thermoplast-Oberfläche vulkanisiert, die um mehr als 15°C unterhalb der Vicat-Erweichungstemperatur (Heat Distortion Temperatur HDT = Warmformbeständigkeit ) der jeweiligen Thermoplasten liegen, dieser Bereich lag bei etwa 110 bis - 210 °C.

Zur Herstellung der Verbundformteile wurden die beiden Reaktivkomponenten (I + II) des Siliconkautschukes jeweils in einer 2-Komponenten-Dosieranlage über einen Mischkopf mit angeschlossenem Statikmischer sowie über einen Spritzgiessautomaten unter Druck bei 25-100°C im Verhältnis 1: 1 dem Formwerkzeug zugeführt. Das Formnest im Werkzeug war für eine Platte der Dimension 100 x 30 x 6 mm ausgelegt, das durch einen Schieber verkleinert werden kann. In einer der Ausführungsformen der Herstellung des Verbundmaterials wird zunächst der jeweilige Thermoplast nach Maßgabe seiner jeweiligen Erweichungstemperatur bei 80-350 °C über einen zweiten getrennten Spritzgießautomaten sowie einen getrennten gegebenenfalls gekühlten Einspritzkanal und ein durch den Schieber verkleinertes Formnest von 100 x 30 x 3 mm eingespritzt. Nach der Abkühlung in ca. 20 sec auf mehr als 15°C unterhalb der Vicaterweichungstemperatur spritzt man anschließend die Siliconkautschukmischung in das durch Öffnung des Schiebers freigegebene vollständige Formnest von 100 x 30 x 6 mm.
In einer zweiten Ausführungsform legt man ein Thermoplast-Formteil von ca. 3 mm Dicke in das Formnest der beheizten Form ein.
Nach diesem Verfahren wurden die in Tabelle 1 bewerteten Prüfkörper angefertigt. Die Formtemperatur lag dabei mindestens 15°C unterhalb der Vicater-weichungstemperatur für das jeweilige Thermoplastmaterial. Zum Beispiel erfolgte die Aushärtung des Siliconkautschukes auf Polyamid 6.6 (PA 6.6), Polyamid 6 (PA 6), Polybutylenterephthalat (PBT) bei Werkzeugtemperaturen von 140-155 °C oder bei Polyphenylensulfid (PPS) bei Werkzeugtemperaturen von 140-210 °C. Der Haltedruck für dieses Formwerkzeug betrug 35 t. Die Aushärtezeiten für den Siliconkautschuk lagen hierbei im Bereich 10-100 sec.
Die Vicat-Erweichungstemperatur wird für PBT Celenax:HDT/A bei 1,8 MPa nach ISO 75 Teil 1. und 2 zu 180 - 190°C , die für für PPS Fortron HDT/A bei 1,8 MPa nach ISO 75 Teil 1 und 2 zu 270°C gemessen.
Die in den Beispielen eingesetzten Formen für die Herstellung der Verbundformteile waren Stahlformen mit polierter Oberfläche der Stahlqualität 1.2343. Die Haftung der ausgehärteten Siliconkautschukmischungen auf verschiedenen Substraten wurde in Anlehnung an DIN 53 289 (Rollenschälversuch) mit mindestens jeweils 3 Probekörpern bei einer Zuggeschwindigkeit von 100 mm/min 24 Stunden nach Herstellung geprüft, ohne die Probekörper einer zusätzlichen Wärmebehandlung zuzuführen Die Ergebnisse der Rollenschälversuche sind in Tabelle 1 zusammengefasst.

Tabelle 1 zeigt, dass die jeweiligen Rezepturen der Beispiele 1 bis 6 in Abhängigkeit vom Substrat mehr oder weniger große Vor- und Nachteile bei der Haftung zeigen können. Mit den erfindungsgemäßen Silikokautschukmischungen konnten auf allen Substraten hohe Haftwerte ohne Ausfallerscheinungen erzielt werden. Tabelle 1 weist als Gesamtbewertung die Summe der Einzelhaftungen in [N/mm] aus.

**Tabelle 1**

| Substrat | Beispiel 1 [N/mm] | Beispiel 2 [N/mm] | Beispiel 3 [N/mm] | Beispiel 4 [N/mm] | Beispiel 5 [N/mm] | Beispiel 6 [N/mm] |
|---|---|---|---|---|---|---|
| PA 6.6 | 2,9 | 2,7 | 1,9 | 1,7 | 1,7 | 1,3 |
| PA 6 | 2,5 | 2,3 | 0,4 | 1,2 | 1,4 | 1,6 |
| PBT | 2,9 | 3,5 | 3,3 | 2,4 | 3,4 | 1,9 |
| PPS | 1,7 | 1,8 | 1,6 | 1,7 | 1,6 | 1,7 |
| **Summe** | **10** | **10,3** | **7,2** | **7** | **6,5** | **6,5** |

## Patentansprüche

1. Additionsvernetzende Siliconkautschukmischung, enthaltend:
a) mindestens ein lineares oder verzweigtes Organopolysiloxan mit mindestens zwei Alkenylgruppen mit einer Viskosität von 0,01 bis 30.000 Pa·s,
b) mindestens ein Organohydrogensiloxan mit jeweils mindestens 2 SiH-Einheiten pro Molekül, mit der Maßgabe, dass
i) mindestens eines der genannten Organohydrogensiloxane einen Gehalt von mehr als 7 mmol SiH/ g aufweist,
ii) mindestens eines der genannten Organohydrogensiloxane mindestens eine aromatische Gruppe im Molekül aufweist, und
iii) die Merkmale i) und ii) im selben Organohydrogensiloxan oder in verschiedenen Organohydrogensiloxanen verwirklicht sein können,
worin die Komponente b) die Komponenten b1), b2) und gegebenenfalls die Komponente b3) umfaßt, wobei
b1) mindestens ein Organohydrogensiloxan mit mindestens zwei SiH-Einheiten pro Molekül und einem Gehalt von mehr als 7 mmol SiH/ g ist, das keine aromatischen Gruppen enthält,
b2) mindestens ein Organohydrogensiloxan mit mindestens zwei SiH-Einheiten pro Molekül und mindestens einer im Molekül enthaltenen aromatischen Gruppe ist,
und die gegebenenfalls vorliegende Komponente
b3) mindestens ein Organohydrogensiloxan mit mindestens zwei SiH-Einheiten pro Molekül und einem Gehalt von weniger als 7 mmol SiH/ g ist, das keine aromatischen Gruppen enthält.
c) mindestens einen Pt-, Ru- und/oder Rh-Katalysator,
d) mindestens ein Alkoxysilan und/oder Alkoxysiloxan, die jeweils mindestens eine Epoxygruppe aufweisen,
e) gegebenenfalls mindestens einen Inhibitor,
f) gegebenenfalls mindestens einen, gegebenenfalls oberflächlich modifizierten Füllstoff,
g) gegebenenfalls mindestens einen Hilfsstoff,
wobei das molare Verhältnis der Gesamtmenge der SiH-Gruppen zu der Gesamtmenge an Si-gebundenen Alkenylgruppen aller Komponenten in der Mischung mindestens 0,7 beträgt.

2. Additionsvernetzende Siliconkautschukmischung nach Anspruch 1, **dadurch gekennzeichnet, dass** das Organopolysiloxan a) ein lineares oder verzweigtes Polysiloxan ist, das die folgenden Siloxy-Einheiten aufweisen kann: 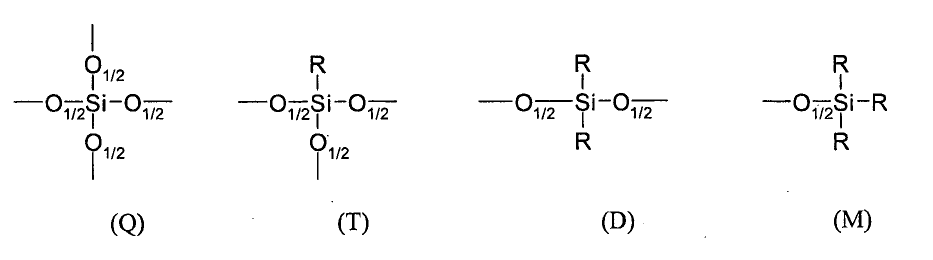 worin die Substituenten R gleich oder verschieden sein können und aus der Gruppe ausgewählt werden, die besteht aus
- einem geradkettigen, verzweigten oder cyclischen Alkylrest mit bis zu 12 Kohlenstoffatomen, der gegebenenfalls substituiert sein kann mit mindestens einem Substituenten, ausgewählt aus der Gruppe, die aus Phenyl und Halogen, insbesondere Fluor, besteht,
- einem geradkettigen, verzweigten oder cyclischen Alkenylrest mit bis zu 12 Kohlenstoffatomen,
- einem Phenylrest,
- Hydroxyl und
- Einem geradkettigen, verzweigten oder cyclischen Alkoxyrest mit bis zu 6 Kohlenstoffatomen,
oder zwei Substituenten R aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen,
mit der Maßgabe, dass mindestens zwei Substituenten R je Molekül den genannten Alkenylrest darstellen, der gleich oder verschieden sein kann.

3. Additionsvernetzende Siliconkautschukmischung nach Anspruch 1 oder 2, worin die Komponente(n) b) aus linearen, verzweigten oder cyclischen Polysiloxanen ausgewählt werden, die die folgenden Siloxy-Einheiten aufweisen können: 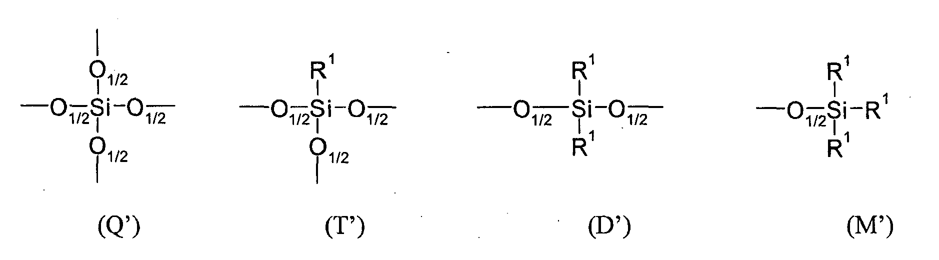 worin R¹ gleich oder verschieden sein kann und aus der Gruppe ausgewählt wird, die besteht aus
- Wasserstoff,
- einem geradkettigen, verzweigten oder cyclischen Alkylrest mit bis zu 12 Kohlenstoffatomen, der gegebenenfalls mit einer aromatischen Gruppe substituiert sein kann,
- einem geradkettigen, verzweigten oder cyclischen Alkenylrest mit bis zu 12 Kohlenstoffatomen,
- Hydroxyl,
- einer aromatischen Gruppe und
- einem geradkettigen, verzweigten oder cyclischen Alkoxyrest mit bis zu 6 Kohlenstoffatomen,
oder zwei Gruppen R¹ aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen.

4. Additionsvernetzende Siliconkautschukmischung nach einem oder mehreren der Ansprüche 1 bis 3, **dadurch gekennzeichnet, daß** die Alkoxysilane gemäß Komponente d) ausgewählt werden aus Glycidoxypropyltrialkoxysilan, 2-(3,4-Epoxycyclo-hexyl)ethyltrialkoxysilan und Methacryloxypropyltrialkoxysilan.

5. Verfahren zur Herstellung der additionsvernetzenden Siliconkautschukmischung nach einem oder mehreren der Ansprüche 1 bis 4, **dadurch gekennzeichnet, dass** es das Vermischen der Komponenten a) bis d) und wahlweise der Komponenten e) bis g) umfasst.

6. Verfahren nach Anspruch 5, **dadurch gekennzeichnet, dass** es die Herstellung mindestens einer Teilmischung, die mehr als eine aber nicht alle der Komponenten a) bis g) umfasst, beinhaltet.

7. Verfahren nach Anspruch 5 oder 6, **dadurch gekennzeichnet, daß** eine erste Teilmischung durch Zusammengeben von
- mindestens einem Organopolysiloxan a)
- gegebenenfalls mindestens einem Füllstoff f)
- gegebenenfalls mindestens einem Hilfsstoff g),
- mindestens einem Katalysator c) und
- gegebenenfalls mindestens einem Alkoxysilan und/oder Alkoxysiloxan d), hergestellt wird,
eine zweite Teilmischung durch Zusammengeben von
- gegebenenfalls einem Organopolysiloxan a),
- mindestens einem Organohydrogensiloxan b1),
- mindestens einem Organohydrogenpolysiloxan b2),
- gegebenenfalls mindestens einem Organosiloxan b3),
- gegebenenfalls mindestens einem Füllstoff f),
- gegebenenfalls mindestens einem Alkoxysilan und/oder Alkoxysiloxan d),
- gegebenenfalls mindestens einem Inbibitor e) und
- gegebenenfalls mindestens einem Hilfsstoff g)
hergestellt wird,
und die beiden Teilmischungen anschließend vermischt werden.

8. Verfahren nach Anspruch 5 oder 6, **dadurch gekennzeichnet, daß** eine erste Teilmischung durch Zusammengeben von
- mindestens einem Organopolysiloxan a),
- gegebenenfalls mindestens einem Füllstoff f)
- gegebenenfalls mindestens einem Hilfsstoff g),
- mindestens einem Katalysator c) und
- gegebenenfalls mindestens einem Alkoxysilan und/oder Alkoxysiloxan d) sofern diese nicht in der zweiten oder dritten Teilmischung enthalten sind,
hergestellt wird,
eine zweite Teilmischung durch Zusammengeben von
- mindestens einem Organohydrogensiloxan b1),
- gegebenenfalls mindestens einem eine aromatische Gruppe enthaltenden Organohydrogensiloxan b2), sofern nicht in der dritten Teilmischung enthalten,
- gegebenenfalls mindestens einem Organosiloxan b3),
- gegebenfalls mindestens einem Organopolysiloxan a),
- gegebenenfalls mindestens einem Füllstoff f),
- gegebenenfalls mindestens einem Alkoxysilane und/oder Alkoxysiloxane d), sofern nicht in der ersten oder dritten Teilmischung enthalten,
- gegebenenfalls mindestens einem Inhibitor e) und
- gegebenenfalls mindestens einem Hilfsstoffe g)
hergestellt wird,
eine dritte Teilmischung durch Zusammengeben von
- mindestens einem eine aromatische Gruppe enthaltenden Organohydrogensiloxan b2) und/oder
- mindestens einem Alkoxysilan und/oder Alkoxysiloxan d),
jeweils soweit die Komponenten b2) bzw. d) nicht in der ersten oder zweiten Teilmischung enthalten sind,
- gegebenenfalls mindestens einem Organohydrogensiloxan b1), soweit nicht in der zweiten Teilmischung enthalten,
- gegebenenfalls mindestens einem Organohydrogensiloxan b3), soweit nicht in
- der zweiten Teilmischung enthalten,
- gegebenfalls mindestens einem Organopolysiloxan a),
- gegebenfalls mindestens einem Füllstoff f) und
- gegebenenfalls mindestens einem Hilfsstoff g)
hergestellt wird, und die drei Teilmischungen anschließend vermischt werden.

9. Additionsvernetzte Silikonkautschukmischungen erhalten durch Vernetzen der Zusammensetzungen nach einem der Ansprüche 1 bis 4.

10. Verfahren zur Herstellung von Verbund-Formteilen **dadurch gekennzeichnet, dass** mindestens eine additionsvernetzende Siliconkautschukmischung nach einem oder mehreren der Ansprüche 1 bis 4 auf einem Substrat zur Vernetzung gebracht wird.

11. Verfahren nach Anspruch 10, worin das Substrat ausgewählt wird aus mineralischen, metallischen, duroplastischen und/oder thermoplastischen Substraten.

12. Verfahren nach Anspruch 10 oder 11, **dadurch gekennzeichnet, dass** die Siliconkautschukmischung auf der Oberfläche eines zuvor hergestellten duroplastischen oder thermoplastischen Formteiles gegebenenfalls unter Aufstreichen, Giessen, Kalandieren, Rakeln sowie Walzen aufgetragen, anschließend bei Temperaturen von 0 bis 300°C vernetzt und dabei zur Haftung gebracht wird.

13. Verfahren nach einem der Ansprüche 10 bis 12, **dadurch gekennzeichnet, dass** die Siliconkautschukmischung auf der Oberfläche eines zuvor in einem Spritzgießwerkzeug spritzgegossenen duroplastischen oder thermoplastischen Formteiles bei Temperaturen von 50-300°C vulkanisiert and dabei zur Haftung gebracht wird.

14. Verfahren nach einem der Ansprüche 10 bis 13, **dadurch gekennzeichnet, dass** das thermoplastische Material aus Polybutylenterephthalat, Polyamid oder Polyphenylensulfid ausgewählt wird.

15. Verfahren nach einem der Ansprüche 10 bis 14, worin die Herstellung der additionsvernetzenden Silikonkautschukmischung durch Mischen der Teilmischungen, wie in einem der Ansprüche 6 bis 8 beschrieben erfolgt.

16. Verbundformteile aus einem mineralischen, metallischen, duroplastischen und/oder thermoplastischen Substrat und einer additionsvernetzten Silikonkautschukmischung nach Anspruch 9.

17. Verbundformteile nach Anspruch 16, bei denen es sich um Dicht- und/oder Dämpfungs-Halterungselemente, Griffe, Tastaturen, Schalter, Duschköpfe, Lampenfassungen oder sonstigen Befestigungen handelt.

## Claims

1. An addition cross linking silicone rubber blend comprising:
a) at least one linear or branched organopolysiloxane having at least two alkenyl groups possessing a viscosity of 0.01 to 30 000 Pa.s,
b) at least one organohydrogensiloxane having at least 2 SiH moieties for each molecule, with the provision that
i) at least one of said SiH organohydrogensiloxanes has a content of more than 7 mmole SiH/g,
ii) at least one of said organohydrogensiloxanes comprises at least one aromatic group in the molecule
iii) the features i) and ii) may be realised in the same organohydrogensiloxane or in different organohydrogensiloxanes,
wherein component b) includes components b1) and b2) and optionally component b3), wherein
b1) is at least one organohydrogensiloxane having at least 2 SiH moieties for each molecule and a content of more than 7 mmole SiH/g, and which contains no aromatic groups,
b2) is at least one organohydrogensiloxane having at least 2 SiH moieties for each molecule and having at least one aromatic group included in the molecule,
and component b3) optionally being present,
contains at least one organohydrogensiloxane having at least 2 SiH moieties for each molecule and a content of less than 7 mmole SiH/g, and which contains no aromatic groups,
c) at least one Pt, Ru and/or Rh catalyst,
d) at least one alkoxysilane and/or alkoxysiloxane each having at least one epoxy group,
e) optionally at least one inhibitor,
f) optionally at least one appropriately surface modified filler,
g) optionally at least one additive,
wherein the molar ratio of the total amount of SiH groups to the total amount of Sibound alkenyle groups of all components in the blend is at least 0.7.

2. The addition cross linking silicone rubber blend according to claim 1 **characterised in that** organopolysiloxane a) is a linear or branched polysiloxane which may have the following siloxy moieties: 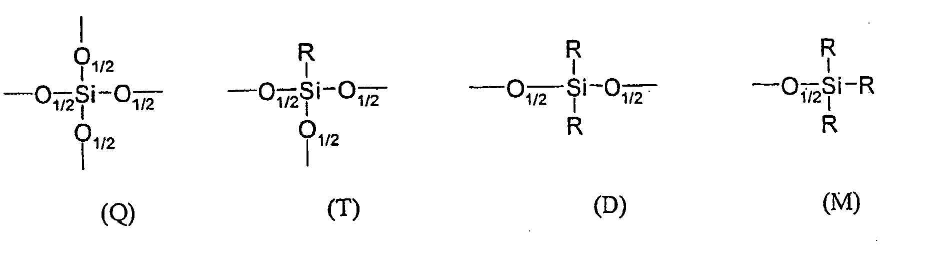 wherein substituents R may be equal or different and may be selected from the group consisting of
- a straight, branched or cyclic alkyl radical having up to 12 carbon atoms which optionally may be substituted with at least one substituent selected from the group consisting of phenyl and halogen, especially fluorine,
- a straight, branched or cyclic alkenyl radical having up to 12 carbon atoms,
- a phenyl radical,
- hydroxyl and
- a straight, branched or cyclic alkoxy radical having up to 6 carbon atoms, or two substituents R from different siloxy moieties together form a straight, branched or cyclic alkane diyle radical having 2 to 12 carbon atoms between two silicon atoms, with the provision that at least two substituents R of each molecule represent said alkenyl radical which may be equal or different.

3. The addition cross linking silicone rubber blend according to claim 1 or 2 wherein component(s) b) are selected from linear, branched or cyclic polysiloxanes which may have the following siloxy moieties: 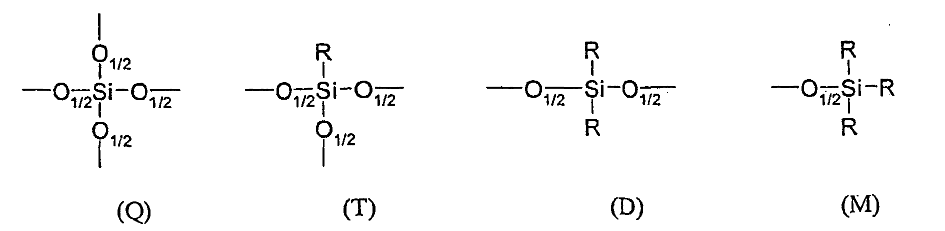
- hydrogen,
- a straight, branched or cyclic alkyl radical having up to 12 carbon atoms, which optionally may be substituted with an aromatic group,
- a straight, branched or cyclic alkenyl radical having up to 12 carbon atoms,
- hydroxyl,
- an aromatic group and
- a straight, branched or cyclic alkoxy radical having up to 6 carbon atoms,
or two groups R¹ from different siloxy moieties together form a straight, branched or cyclic alkane diyle radical having 2 to 12 carbon atoms between two silicon atoms.

4. The addition cross linking silicone rubber blend according to one or more of claims 1 to 3, **characterised in that** the alkoxysilanes according to component d) are selected from glycidoxy propyl trialkoxysilane, 2-(3,4-epoxycyclo-hexyle) ethyltrialkoxysilane and methacryloxypropyl trialkoxysilane.

5. A process for manufacturing the addition cross linking silicone rubber blend according to one or more of claims 1 to 4, **characterised in that** it involves mixing components a) to d) and optionally components e) to g).

6. The process according to claim 5, **characterised in that** it comprises producing at least one partial blend which includes more than one but not all of components a) to g).

7. The process according to claim 5 or 6, **characterised in that** a first partial blend is produced by contacting
- at least one organopolysiloxane a),
- optionally at least one filler f),
- optionally at least one additive g),
- at least one catalyst c) and
- optionally at least one alkoxysilane and/or alkoxysiloxan d),
a second partial blend is produced by contacting
- optionally one organopolysiloxane a),
- at least one organohydrogensiloxane b1)
- at least one organohydrogenpolysiloxane b2)
- optionally at least one organosiloxane b3),
- optionally at least one filler f),
- optionally at least one alkoxysilane and/or alkoxysiloxan d),
- optionally at least one inhibitor e) and
- optionally at least one additive g),
and the two partial blends are then mixed together.

8. The process according to claim 5 or 6, **characterised in that** a first partial blend is produced by contacting
- at least one organopolysiloxane a),
- optionally at least one filler f),
- optionally at least one additive g),
- at least one catalyst c) and
- optionally at least one alkoxysilane and/or alkoxysiloxan d), unless contained in the second or third partial blend,
a second partial blend is produced by contacting
- at least one organohydrogensiloxane b1),
- optionally at least one organohydrogensiloxane b2), containing at least one aromatic group, unless contained in the third partial blend,
- optionally at least one organosiloxane b3),
- optionally at least one organopolysiloxane a),
- optionally at least one filler f),
- optionally at least one alkoxysilane and/or alkoxysiloxane d), unless not contained in the first or third partial blend,
- optionally at least one inhibitor e) and
- optionally at least one additive g),
a third partial blend is produced by contacting
- at least one organohydrogensiloxane b2) containing at least one aromatic group and/or
- at least one alkoxysilane and/or alkoxysiloxane d), as far as each component b2) and d), respectively, is not contained in the first or second partial blend,
- optionally at least one organohydrogensiloxane b1), as far as not contained in the second partial blend,
- optionally at least one organohydrogensiloxane b3), as far as not contained in the second partial blend,
- at least one organopolysiloxane a),
- at least one filler f) and
- optionally at least one additive g),
and the three partial blends then will be mixed together.

9. Addition cross linking silicone rubber blends obtained by cross linking the compositions according to one of claims 1 to 4.

10. A process for manufacturing moulded composite parts **characterised in that** at least one cross linking silicone rubber blend according to one or more of claims 1 to 4 is caused to cross link on a substrate.

11. The process according to claim 10, wherein the substrate is selected from mineral, duroplastic and/or thermoplastic substrates.

12. The process according to claim 10 or 11, **characterised in that** the silicone rubber blend is coated onto the surface of a previously produced thermoplastic or duroplastic moulded part by spreading, casting, calendering, knife coating as well as roller coating as required and then will be cross linked at temperatures of 0 to 300 °C and thereby will be brought to adhesion.

13. The process according to claim 10 to 12, **characterised in that** the silicone rubber blend vulcanises at temperatures of 50 to 300 °C on the surface of a thermoplastic or duroplastic moulded part previously produced in a injection mould, and thereby will be brought to adhesion.

14. The process according to one of claims 10 to 13 **characterised in that** the thermoplastic material is selected from polybutylene terephthalate, polyamide or polyphenylene sulfide.

15. The process according to one of claims 10 to 14, wherein production of the cross linking silicone rubber blend is accomplished by mixing the partial blends as set forth in one of claims 6 to 8.

16. Composite moulded parts of a mineral, metallic, duroplastic und/or thermoplastic substrate and an addition cross linking silicone rubber blend according to claim 9.

17. The composite moulded parts according to claim 16 which are sealing and/or damping holder elements, handles, key pads, switches, shower heads, lamp sockets or other mounting parts.

## Revendications

1. Mélange de caoutchouc de silicone réticulable par addition, comprenant :
a) au moins un organopolysiloxane linéaire ou ramifié ayant au moins deux groupements alcényle d'une viscosité de 0,01 à 30 000 Pa.s,
b) au moins un organohydrogénosiloxane ayant respectivement au moins 2 unités SiH par molécule, à condition que
i) au moins l'un des organohydrogénosiloxanes cités présente une teneur de plus de 7 mmoles de SiH/g,
ii) au moins l'un des organohydrogénosiloxanes cités présente au moins un groupement aromatique au sein de la molécule, et
iii) les caractéristiques décrites aux points i) et ii) puissent être mises en oeuvre dans le même organohydrogénosiloxane ou dans différents organohydrogénosiloxanes,
dans lequel le composant b) englobe les composants b1), b2) et, éventuellement, le composant b3), où
le composant b1) représente au moins un organohydrogénosiloxane ayant au moins deux unités SiH par molécule et une teneur de plus de 7 mmoles de SiH/g, qui ne comprend pas de groupements aromatiques,
le composant b2) représente au moins un organohydrogénosiloxane ayant au moins deux unités SiH par molécule et au moins un groupement aromatique contenu dans la molécule,
et le composant éventuellement présent
b3) représente au moins un organohydrogénosiloxane ayant au moins deux unités SiH par molécule et une teneur de moins de 7 mmoles de SiH/g, qui ne comprend pas de groupements aromatiques,
c) au moins un catalyseur à base de Pt, Ru et/ou Rh,
d) au moins un alcoxysilane et/ou un alcoxysiloxane, qui présentent respectivement au moins un groupement époxy,
e) éventuellement, au moins un inhibiteur,
f) éventuellement, au moins une charge éventuellement modifiée en surface,
g) éventuellement, au moins un adjuvant,
le rapport molaire de la quantité totale des groupements SiH à la quantité totale des groupements alcényle liés à un atome de Si de tous les composants du mélange atteint au moins 0,7.

2. Mélange de caoutchouc de silicone réticulable par addition selon la revendication 1, **caractérisé en ce que** l'organopolysiloxane a) est un polysiloxane linéaire ou ramifié qui peut présenter les unités siloxy suivantes : 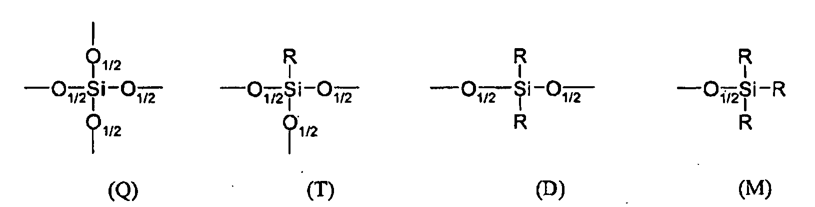 dans lesquelles les substituants R peuvent être identiques ou différents et sont choisis dans le groupe constitué
- d'un radical alkyle linéaire, ramifié ou cyclique ayant jusqu'à 12 atomes de carbone, qui peut être éventuellement substitué par au moins un substituant choisi dans le groupe comprenant le phényle et un halogène, en particulier le fluor,
- d'un radical alcényle linéaire, ramifié ou cyclique ayant jusqu'à 12 atomes de carbone,
- d'un radical phényle,
- d'un hydroxyle, et
- d'un radical alcoxy linéaire, ramifié ou cyclique ayant jusqu'à 6 atomes de carbone,
ou deux substituants R constitués de diverses unités siloxy forment conjointement un radical alcanediyle linéaire, ramifié ou cyclique ayant 2 à 12 atomes de carbone entre deux atomes de silicium,
à condition qu'au moins deux substituants R par molécule représentent le radical alcényle cité, qui peut être identique ou différent.

3. Mélange de caoutchouc de silicone réticulable par addition selon la revendication 1 ou 2, dans lequel le ou les composants b) est ou sont choisis parmi des polysiloxanes linéaires, ramifiés ou cycliques, qui peuvent présenter les unités siloxy suivantes : 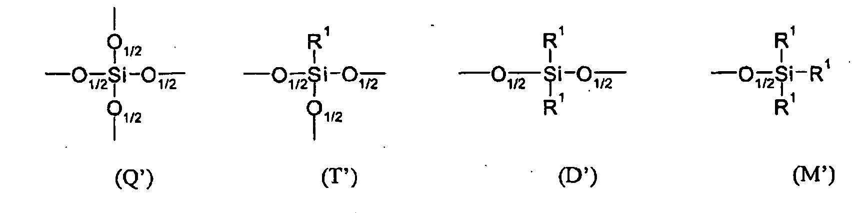 dans lesquelles R¹ peut être identique ou différent et est choisi dans le groupe constitué :
- de l'hydrogène,
- d'un radical alkyle linéaire, ramifié ou cyclique ayant jusqu'à 12 atomes de carbone, qui peut éventuellement être substitué par un groupement aromatique,
- d'un radical alcényle linéaire, ramifié ou cyclique ayant jusqu'à 12 atomes de carbone,
- d'un hydroxyle,
- d'un groupement aromatique et
- d'un radical alcoxy linéaire, ramifié ou cyclique ayant jusqu'à 6 atomes de carbone,
ou deux groupements R¹ constitués d'unités siloxy différentes forment conjointement un radical alcanediyle linéaire, ramifié ou cyclique ayant 2 à 12 atomes de carbone entre deux atomes de silicium.

4. Mélange de caoutchouc de silicone réticulable par addition selon l'une quelconque ou plusieurs des revendications 1 à 3, **caractérisé en ce que** les alcoxysilanes selon le composant d) sont choisis parmi le glycidoxypropyltrialcoxysilane, le 2-(3,4-époxycyclohexyl)éthyltrialcoxysilane et le méthacryloxypropyltrialcoxysilane.

5. Procédé de fabrication du mélange de caoutchouc de silicone réticulable par addition selon l'une quelconque ou plusieurs des revendications 1 à 4, **caractérisé en ce qu'**il comprend le mélange des composants a) à d) et, au choix, des composants e) à g).

6. Procédé selon la revendication 5, **caractérisé en ce qu'**il comprend la fabrication d'au moins un mélange partiel, qui contient plus d'un composant, mais pas tous les composants a) à g).

7. Procédé selon la revendication 5 ou 6, **caractérisé en ce que** l'on fabrique un premier mélange partiel par addition conjointe
- d'au moins un organopolysiloxane a)
- éventuellement, d'au moins une charge f)
- éventuellement, d'au moins un adjuvant g),
- d'au moins d'un catalyseur c), et
- éventuellement, d'au moins un alcoxysilane et/ou d'un alcoxysiloxane d),
un second mélange partiel par addition conjointe
- éventuellement, d'un organopolysiloxane a),
- d'au moins un organohydrogénosiloxane b1),
- d'au moins un organohydrogénopolysiloxane b2),
- éventuellement, d'au moins un organosiloxane b3),
- éventuellement, d'au moins une charge f)
- éventuellement, d'au moins un alcoxysilane et/ou un alcoxysiloxane d),
- éventuellement, d'au moins un inhibiteur e) et
- éventuellement, d'au moins un adjuvant g),
et on mélange ensuite les deux mélanges partiels.

8. Procédé selon la revendication 5 ou 6, **caractérisé en ce que** l'on fabrique un premier mélange partiel par addition conjointe
- d'au moins un organopolysiloxane a)
- éventuellement, d'au moins une charge f)
- éventuellement, d'au moins un adjuvant g),
- d'au moins d'un catalyseur c) et
- éventuellement, d'au moins un alcoxysilane et/ou d'un alcoxysiloxane d), pour autant que ceux-ci ne soient pas contenus dans le deuxième ou dans le troisième mélange partiel,
un second mélange partiel par addition conjointe
- d'au moins un organohydrogénosiloxane b1),
- éventuellement, d'au moins un organohydrogénosiloxane b2) contenant un groupement aromatique, pour autant qu'il ne soit pas contenu dans le troisième mélange partiel,
- éventuellement, d'au moins un organosiloxane b3),
- éventuellement, d'au moins un organopolysiloxane a)
- éventuellement, d'au moins une charge f)
- éventuellement, d'au moins un alcoxysilane et/ou un alcoxysiloxane d),
pour autant que ceux-ci ne soient pas contenus dans le premier ou dans le deuxième mélange partiel,
- éventuellement, d'au moins un inhibiteur e) et
- éventuellement, d'au moins un adjuvant g),
un troisième mélange partiel par addition conjointe
- d'au moins un organohydrogénosiloxane b2) contenant un groupement aromatique et/ou
- d'au moins un alcoxysilane et/ou un alcoxysiloxane d),
pour autant que, respectivement, le composant b2) ou le composant d) ne soit pas contenu dans le premier ou dans le troisième mélange partiel,
- éventuellement, d'au moins un organohydrogénosiloxane b1), pour autant que celui-ci ne soit pas contenu dans le deuxième mélange partiel,
- éventuellement, d'au moins un organohydrogénosiloxane b3), pour autant que celui-ci ne soit pas contenu dans le deuxième mélange partiel,
- éventuellement, d'au moins un organopolysiloxane a)
- éventuellement, d'au moins une charge f) et
- éventuellement, d'au moins un adjuvant g),
et on mélange ensuite les trois mélanges partiels.

9. Mélanges de caoutchouc de silicone réticulables par addition obtenus par réticulation des compositions selon l'une quelconque des revendications 1 à 4.

10. Procédé de fabrication de pièces moulées composites, **caractérisé en ce que** l'on soumet à une réticulation au moins un mélange de caoutchouc de silicone réticulable par addition selon l'une quelconque ou plusieurs des revendications 1 à 4 sur un substrat.

11. Procédé selon la revendication 10, dans lequel le substrat est choisi parmi des substrats minéraux, métalliques, duroplastiques et/ou thermoplastiques.

12. Procédé selon la revendication 10 ou 11, **caractérisé en ce que** l'on applique le mélange de caoutchouc de silicone sur la surface d'une pièce moulée duroplastique ou thermoplastique, préalablement fabriquée, éventuellement par application à la brosse, par coulée, calandrage, à la racle et par laminage, puis on procède à sa réticulation à une température de 0 à 300 °C et on le fait en l'occurrence adhérer.

13. Procédé selon l'une quelconque des revendications 10 à 12, **caractérisé en ce que** l'on vulcanise le mélange de caoutchouc de silicone à la surface d'une pièce moulée duroplastique ou thermoplastique, préalablement moulée par injection dans un outil de moulage par injection à une température de 50 à 300 °C et on le fait en l'occurrence adhérer.

14. Procédé selon l'une quelconque des revendications 10 à 13, **caractérisé en ce que** le matériau thermoplastique est choisi parmi un poly(téréphtalate de butylène), un polyamide ou un poly(sulfure de phénylène).

15. Procédé selon l'une quelconque des revendications 10 à 14, dans lequel la fabrication du mélange de caoutchouc de silicone réticulable par addition se fait par malaxage de mélanges partiels, tels qu'ils sont décrits dans l'une quelconque des revendications 6 à 8.

16. Pièces moulées composites constituées d'un substrat minéral, métallique, duroplastique et/ou thermoplastique et d'un mélange de caoutchouc de silicone réticulable par addition selon la revendication 9.

17. Pièces moulées composites selon la revendication 16, qui sont des éléments de fixation d'étanchéité et/ou d'amortissement, des poignées, des claviers, des commutateurs, des pommes de douche, des douilles de lampes ou d'autres fixations.
